(19) Europäisches Patentamt
European Patent Office
Office européen des brevets

(11) **EP 2 036 930 A1**

(12) **EUROPEAN PATENT APPLICATION**

(43) Date of publication:
**18.03.2009 Bulletin 2009/12**

(21) Application number: **07301359.1**

(22) Date of filing: **12.09.2007**

(51) Int Cl.:
***C08F 255/00*** *(2006.01)* ***C08F 255/02*** *(2006.01)*
***C08F 291/18*** *(2006.01)* ***A01N 33/12*** *(2006.01)*
***A01N 25/10*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **INSTITUT NATIONAL DE LA RECHERCHE AGRONOMIQUE (INRA)**
**75341 Paris Cedex 07 (FR)**

(72) Inventors:
- **Riquet, Anne-Marie**
  **91190 GIF SUR YVETTE (FR)**
- **Nishat, Anjum**
  **91220 PALAISEAU (FR)**

(74) Representative: **Catherine, Alain et al**
**Cabinet Harlé & Phélip**
**7 rue de Madrid**
**75008 Paris (FR)**

(54) **Copolymer-grafted polyolefin substrate having antimicrobial properties and method for grafting**

(57) The present invention concerns a method for grafting a copolymer onto a polyolefin substrate. The method comprises the following steps:
(a) irradiating the said substrate with ionizing radiation to obtain an activated polyolefin substrate,
(b) bringing into contact the activated polyolefin substrate with a mixture of at least two compounds in distilled water comprising:
(i) from 10 to 40% by volume, related to the total volume of the reaction medium, of a hydrophilic unsaturated monomer selected from monomers having the formula:

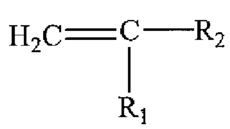

wherein $R_1$ is H or methyl, $R_2$ is -COOH, $-NH_2$, -CON$(R_3)_2$, and $R_3$ is H or methyl,
(ii) from 20 to 50% by volume, related to the total volume of the reaction medium, of an antimicrobial agent having an average molecular weight of at least 200 g.mol$^{-1}$, to thereby form a copolymer-grafted polyolefin substrate.
The invention also relates to copolymer-grafted polyolefin substrates obtained by this method and to a packaging material comprising copolymer-grafted polyolefin substrate according to the invention.

EP 2 036 930 A1

## Description

The present invention relates generally to grafted polyolefin substrates having antimicrobial properties and more particularly to a method for grafting a copolymer having antimicrobial properties onto polyolefin substrates by radiation induced graft polymerization.

Polymeric materials have acquired an enormous potential in the packaging industry where products have to be preserved for a long duration without altering their inherent physical characteristics. One such requirement is the development of a proper packaging so that the packed product remains protected against any microbial infection notably during the storage span. Consequently, control of microbial infection is a major concern for many applications involving, for instance, the preparation and the storage of food, medical and biopharmaceutical products.

This is why a substantial amount of work is being directed to the incorporation of antimicrobial agents into or onto the surface of such polymeric materials. Thus polymeric materials acquire ability to kill, inhibit or delay the growth and metabolism of micro-organisms that may be present in the packed product or packaging material.

Some compounds inherently have antimicrobial properties. For example, quaternary ammonium salts are known for their bactericide and/or bacteriostatic activities and polyethylene glycol compounds are known for their repellent activity. These kinds of compounds have been grafted on various substrates.

Another approach involves modifying the surface properties of the substrate to decrease or to suppress adhesion of micro-organisms (anti-adhesives properties). In the case of certain polymers, notably polyolefins, surfaces are so constituted that they adsorb micro-organisms spontaneously. Such adsorption from aqueous solution is promoted primarily by two types of physical forces, electrostatic attraction and hydrophobic interaction. Polyolefin surfaces are hydrophobic. Micro-organisms usually have hydrophobic domains. Therefore, the micro-organism is attracted to the polyolefin surface at least by hydrophobic interactions between hydrophobic domains of the micro-organism and the polyolefin surface. This is described in, for example, Surface and Interfacial Aspects of Biomedical Polymers, Ed. J. D. Andrade, Plenum Press (1985), Vol. 2, p. 81. In order to suppress adhesion of micro-organisms, efforts have been made to find coatings which resist to the adsorption of micro-organisms. These coatings have a microscopic surface that lacks the structural characteristics responsible for adhesion.

There are several methods for conferring these antimicrobial properties onto polymer surface as well as into the bulk. These methods generally involve modifying the polymer composition by chemically altering its macromolecular structure either by immobilizing an antimicrobial agent onto the polymer surface or blending the polymer with an antimicrobial agent.

Among the known techniques some of them lead to changes into the bulk of the polymer. These changes have a major drawback because the polymer may undergo considerable physical structure changes notably in terms of crystallinity, mechanical strength and thermal stability.

A number of surface modification techniques have also been used to develop surfaces with antimicrobial properties. Some of them are silver coating, surface immobilized polyethylene oxide, surface thiocyanation, and surface modification by various gas plasma (such as oxygen and argon) and plasma immersion ion implantation.

Radiation induced graft polymerization has also been proved efficient to introduce different functionalities onto polymer surface (B. Gupta, N. Anjum, R. Jain, N. Revagade, H. Singh, J. Macromol. Sci. 44 (2004) 275). This surface modification technique involves forming active sites on a polymeric substrate by irradiation with high-energy ionizing radiation either in the presence of a monomer capable of grafting to the active sites, or followed by a contacting step with a monomer. The free radicals produced in the polymer, as a result of the irradiation, act as initiators for the polymerization of the monomer, as well as active sites for grafting.

For example, vinyl monomers have been polymerized onto various inert polymers like PE, PP, PET, LLDPE and HDPE in different shape of polymers (sheet, film, fibre, hollow fibre, fabrics etc.) by radiation induced graft polymerization.

More particularly, surface modification of polypropylene sheets carried out by radiation induced polymerisation of pure and diluted acrylic acid has been disclosed in the document Anjum, N. and al. "Surface designing of polypropylene by critical monitoring of the grafting conditions" J Appl Polym Sci, 2006. According to this document the grafting is strongly dependent on the monomer dilution in the reaction medium. Notably, in the presence of pure monomer, the grafted chains remain confined to the surface. However, in the case of diluted monomer (80% monomer), water acts as the vehicle for the monomer diffusion within the surface layers. Therefore, most of the grafts tend to move inside and only little grafts remain on the surface. Furthermore, in the case of surface modified by pure monomer, the degree of grafting has to be very high in order to get hydrophilic surfaces. But high degree of grafting affects the physical structure of polypropylene notably the crystallinity. In fact, the crystallinity of the grafted polymer decreases with an increase in the degree of grafting. Structural changes in the polypropylene matrix due to the grafting of acrylic acid have been disclosed in the document Anjum, N. et al., "Surface designing of polypropylene by critical monitoring of the grafting conditions: structural investigations" J Appl Polym Sci, 2006.

Therefore, there is a need in the art for an improved method in order to control bacterial adhesion to polyolefin

substrate. Notably, there is a need in the art for modified polyolefins whose modification route must allow selective functionalisation of the surface. Thus the bulk matrix remains almost unaltered with its inherent physicochemical characteristics.

There is also a need in the art for an easily feasible and reproducible method for obtaining polyolefins having antimicrobial properties.

Thus, the invention relates to the grafting of a mixture of at least one hydrophilic monomer and one antimicrobial agent, according to a specific ratio, onto a polyolefin substrate that has been exposed to ionizing radiations. The invention also relates to a method for grafting copolymer onto a polyolefin substrate.

As used herein, "antimicrobial agents" mean polymers or monomers having biocide, bacteriostatic and/or repellent activity. Generally, antimicrobial agents have a high molecular weight i.e. at least 200 $g.mol^{-1}$. Because of their size such compounds are hardly grafted. That means that only a low amount of these compounds are grafted. Furthermore, their distribution on the substrate surface area is not homogeneous.

Surprisingly, it has been found according to the invention that co-grafting these two specific monomers according to specific proportions, one obtains a substrate grafted with an antimicrobial copolymer. This copolymer-grafted polyolefin substrate has a suitable hydrophilicity and a homogeneous distribution of the antimicrobial polymer on the surface of the substrate in contact with the environment.

More surprisingly, it has been found that there is a synergic grafting effect by co-grafting a hydrophilic monomer and an antimicrobial agent. Combining antimicrobial agents with very reactive hydrophilic unsaturated monomers increases the amount of antimicrobial agents incorporated into the copolymer-grafted side chains. Such results are not obtained when the grafting is carried out in two successive steps.

Furthermore, by using a specific ratio of the two specific compounds of the invention it is possible to modulate energetic surface properties of the substrate and to control bacterial adhesion. Consequently, the present invention enables to reduce, inhibit or delay growth of micro-organisms.

Additionally, no significant change due to the radiation grafting in the polyolefin structure was observed. The grafting of the two compounds of the invention does not seem to lead to permeation or diffusion into the bulk matrix. The polymer chains seem to be confined on the surface. Consequently, the present invention overcomes the difficulties of the prior art by providing a copolymer-grafted polyolefin substrate with specific properties without substantially affecting the mechanical and physical properties of the end product material.

According to the present invention suitable hydrophilic properties are obtained notably thanks to a suitable degree of grafting. According to the invention, a suitable degree of grafting means that the degree of grafting is sufficiently high to have a suitable amount of both monomers onto the surface. Additionally, the degree of grafting is sufficiently low so that the physical properties of the substrate are not detectably modified.

Another significant advantage of the present invention is that the antimicrobial grafted polymers are covalently bonded to the polyolefin substrate. Leaching is, therefore, not possible in the present invention. This is a significant advantage in food related application or medical use.

Additionally, a very good reproducibility of grafting is obtained. This is an advantage in order to manufacture such substrate at an industrial scale.

Therefore, it is an object of the present invention to provide a method for grafting a copolymer onto a polyolefin substrate. The method comprises the following steps :

(a) irradiating the said substrate with ionizing radiation to obtain an activated polyolefin substrate,

(b) bringing into contact the activated polyolefin substrate with a mixture of at least two compounds in distilled water comprising:

(i) from 10 to 40% by volume, related to the total volume of the reaction medium, of a hydrophilic unsaturated monomer selected from monomers having the formula:

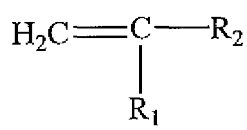

wherein $R_1$ is H or methyl, $R_2$ is -COOH, $-NH_2$, $-CON(R_3)_2$, and $R_3$ is H or methyl,

(ii) from 20 to 50% by volume, related to the total volume of the reaction medium, of an antimicrobial agent having an average molecular weight of at least 200 $g.mol^{-1}$, to thereby form a copolymer-grafted polyolefin substrate.

The invention also relates to copolymer-grafted polyolefin substrates obtained by this method.

The invention also relates to a packaging material comprising copolymer-grafted polyolefin substrate according to the invention.

## FIGURES

Figure 1 shows for different ratio of comonomer mixtures [AA : METAC] the variation of the degree of grafting with the reaction time. Preirradiation dose, 100*k*Gy; Energy of electron beam, 10 MeV; Temperature, 70˚C; Mohr's salt, 0.25%.

Figure 2 shows for different ratio of comonomer mixtures [AA : METAC] the variation of the contact angle with the degree of grafting. Preirradiation dose, 100 kGy; Energy of electron beam, 10 MeV ;Temperature, 70˚C; Mohr's salt, 0.25%.

Figure 3 shows XPS mapping of nitrogen.

Figure 4 shows Zeta potential of ungrafted and grafted polypropylene with AA (20% and 100%), METAC (40%) and a specific ratio of comonomer mixture, AA:METAC (20%:40%). Preirradiation dose, 100 kGy; Energy of electron beam, 10 MeV ;Temperature, 70˚C; Mohr's salt, 0.25%.

Figure 5 shows electron microscopic images of ungrafted and grafted polypropylene showing adhesion of Listeria monocytogenes. (a) Exposed polypropylene, (b) Grafted polypropylene with comonomer mixture, AA:METAC (20%: 40%).

Figure 6 shows the variation of the degree of grafting of acrylic acid (AA) and N, N dimethylacrylamide (DMA) with the ratio of monomer for a 30 min reaction time. Preirradiation dose, 100 kGy; Energy of electron beam, 175 KeV ; Temperature, 70˚C; Mohr's salt, 0.25%.

Figure 7 shows for different ratio of comonomer mixtures [AA : METAC] the variation of the contact angle with the reaction time. Preirradiation dose, 100*k*Gy; Energy of electron beam, 175 KeV; Temperature, 70˚C; Mohr's salt, 0.25%.

Figure 8 shows for different ratio of comonomer mixtures [DMA : METAC] the variation of the contact angle with the reaction time. Preirradiation dose, 100*k*Gy; Energy of electron beam, 175 KeV; Temperature, 70˚C; Mohr's salt, 0.25%.

Figure 9 shows a comparison of the degree of grafting carried out with 40% METAC, 20% AA, 20% DMA and a mixture of AA (20%) + METAC (40%) and a mixture of DMA (20%) + METAC (40%). Preirradiation dose, 100kGy; Energy of electron beam, 175 KeV ; Temperature, 70˚C; Mohr'salt, 0.25%; Reaction Time, 40 min.

Figure 10 shows a comparison of the water contact angle obtained with 40% METAC, 20% AA, 20% DMA and a mixture of AA (20%) + METAC (40%) and a mixture of DMA (20%) + METAC (40%). Preirradiation dose, 100kGy; Energy of electron beam, 175 KeV ; Temperature, 70˚C; Mohr'salt, 0.25%; Reaction Time, 40 min.

Figure 11 shows a comparison of the degree of grafting carried out with a mixture of 20% AA, 30% AA and a mixture of AA (20%) + METAC (40%) and a mixture of AA (30%) + METAC (30%). Preirradiation dose, 100kGy; Energy of electron beam, 175 KeV ; Temperature, 70˚C; Mohr'salt, 0.25%; Reaction Time, 30 min.

Figure 12 shows a comparison of the degree of grafting carried out with 20% DMA, 30% DMA and a mixture of DMA (20%) + METAC (40%) and a mixture of DMA (30%) + METAC (30%). Preirradiation dose, 100kGy; Energy of electron beam, 175 KeV ; Temperature, 70˚C; Mohr' salt, 0.25%; Reaction Time, 30 min.

In the present invention, preferential polyolefin substrates are selected from the group consisting of polyethylene, polypropylene, polyisobutylene, polymethylpentene, mixtures and copolymers thereof. More preferably polyolefin is polypropylene or polyethylene. Polyolefin substrate can be in any shape such as a sheet, a film, a fibre, a hollow fibre or a fabric.

Hydrophilic unsaturated monomers of the present invention are preferably acrylic acid or N,N-dimethylacrylamide.

In the context of the present invention, the antimicrobial agents are compounds having a bacteriostatic, biocide and/or repellent activity. The mechanisms of action are different according to the researched activity.

Preferential monomers able to act as bacteriostatic or biocide agents are quaternary ammonium salts (QASs). QASs are synthetic organic chemicals and are widely used in a variety of areas such as environmental disinfection, cosmetics, ophthalmic solution, and pharmaceutical preparation. Preferably, the QASs generally comprise a positively charged hydrophilic ammonium group and a hydrophobic alkyl chain. These compounds show a biocide and/or bacteriostatic activity against a broad spectrum of bacteria.

Biocide QASs have an antimicrobial effect by damaging the cytoplasmic membrane. However, such an antimicrobial effect is mainly due to the presence of alkyl chain and their surfactant properties. The biocide activity of QAS

increases with the length of the alkyl chain carried by the nitrogen (Ahlström and Al, 1995; 1999). Maximum activity is observed when the carbon number in the alkyl chain ranges from 12 to 16 (Chauhan and Al, 2004; Dizman and Al, 2004). The QASs with long alkyl chains are better adsorbed on cellular surface and thus damaging the cytoplasmic membrane.

Bacteriostatic QASs have an antimicrobial effect by inhibiting reproduction of bacteria.

Biocide or bacteriostatic activity of QASs is well described in both literature and patents.

In order to be grafted the QASs have to be appropriately terminally-functionalised. That means that QASs comprise at least a functional group capable of participating in a polymerisation reaction. The EP 0 591 024 patent describes such kind of compound. Monomers having the following general formula are particularly suitable.

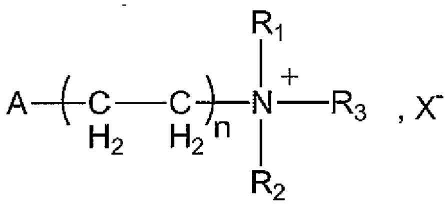

in which

$X^-$ is an anion,
n is 1, 2 or 3,
$R_1$, $R_2$ and $R_3$ are saturated $C_1$-$C_{20}$ alkyl groups, and
A is an ethylene functional group capable of participating in a polymerisation reaction, preferably an acryloyloxy or methacryloyloxy group.

Suitable example of antimicrobial monomer having a bacteriostatic activity is [2-(Methacryloyloxy)ethyl]trimetihylammonium chloride (METAC).

Antimicrobial phosphonium and sulfonium compounds can also be used according to the invention.

Preferential compounds able to act as repellent agents are polyalkylene glycols and more particularly polyethylene glycols (PEG; also referred to as polyethylene oxide, PEO).

PEGs have been investigated extensively in recent years for use as biocompatible, protein repulsive, noninflammatory and nonimmunogenic modifiers for drugs, proteins, enzymes, and surfaces of implanted materials. The basis for these extraordinary characteristics has been attributed to the flexibility of the polymer backbone, and the volume exclusion effect of this polymer in solution or when immobilized at a surface. Surfaces grafted with PEGs are energetically unfavourable for a micro-organism approach in aqueous solution. Consequently, the adhesion of micro-organisms is limited by steric exclusion phenomena.

The solubility of PEGs in water, as well as a number of common organic solvents, facilitates modification by a variety of chemical reactions. Fukui and Tanaka (1976) and Fukui et al., (1987) describes the synthesis of numerous polymerizable derivatives of PEG.

The US 5,879,709 patent discloses covalently crosslinkable and/or polymerizable polyethylene glycols (PEGs). These polymerizable polyethylene glycols are modified with a substituent which is capable of undergoing free radical polymerization. This substituent is a moiety containing a carbon-carbon double bond or triple bond capable of free radical polymerization; and the substituent is linked covalently to the said PEG through linkages selected from ester, ether, thioether, disulfide, amide, imide, secondary amines, tertiary amines, direct carbon-carbon linkages, sulfate esters, sulfonate esters, phosphate esters, urethanes, carbonates, and the like.

Preferential polymers having a repellent activity are terminally-functionalized-polyalkylene glycol, preferably polyethylene glycol.

Examples of such covalently polymerizable polyethylene glycols suitable for the invention include vinyl and allyl ethers of polyethylene glycol, acrylate and methacrylate esters of polyethylene glycol, and the like.

PEGs having a wide range of molecular weights can be employed in the practice of the present invention. According to an advantageous embodiment, the molecular weight (g.mol$^{-1}$) of polyalkylene glycol is in the range of about 200 up to about 10,000 and preferably at least 2,000. Preferably the polyalkylene glycol is polyethylene glycol.

Allyl terminally functionalized polyethylene glycol compound (PEG-allyl) are particularly suitable e.g. PEG 390, PEG 2040 and PEG 10040.

The best surface properties for the polyolefin substrate are provided with a mixture such as defined hereabove, wherein the volume ratio of the hydrophilic unsaturated monomer in the mixture varies from 10 to 40% by volume related to the total volume of reaction medium preferably 15 to 25 % by volume, and more preferably about 20% by volume and

the volume ratio of the antimicrobial agent in the mixture varies from 20 to 50% by volume related to the total volume of monomer mixture and distilled water, preferably 35 to 45 % by volume more preferably about 40%. The reaction medium volume comprises the monomer mixture volume and the distilled water volume.

Preferably, the concentration of hydrophilic unsaturated monomer and antimicrobial agent in the mixture is from 40 to 70%, preferably about 60% by volume.

When the hydrophilic unsaturated monomer is acrylic acid, the mixture preferably comprises:

a) from 10 to 30 % by volume of acid acrylic,
b) from 30 to 50 % by volume of an antimicrobial agent.

When the hydrophilic unsaturated monomer is N,N-dimethylacrylamide, the mixture preferably comprises:

a) from 20 to 40 % by volume of N,N-dimethylacrylamide,
b) from 20 to 40 % by volume of an antimicrobial agent.

In order to prevent homopolymerization, the mixture further comprises a homopolymer inhibitor selected among inorganic salts of polyvalent metals, notably ferrous ammonium sulphate and/or copper chloride, preferably Mohr's salt.

According to an advantageous embodiment, the method further comprises the following steps, preferably in combination:

- keeping the activated material at -80˚C prior to performing step (b).
- a washing step c) after grafting reaction wherein residual monomers are removed from the surface, wherein the copolymer-grafted polyolefin substrate is washed with distilled water in ultrasonic water bath at 40˚C for 15 minutes,
- a drying step d) wherein the copolymer-grafted polyolefin substrate is dried overnight in an air oven at 40˚C.

The ionizing radiations used to form the active sites on the polyolefin substrate should have sufficient energy to ionize the molecular structure and to excite atomic structure. The ionizing radiation can be of any kind, but the most practical kinds comprise electrons and gamma rays.

The activation of the substrate depends on different parameters such as the dose, the energy of electron beam, the kind of substrate, the thickness or the shape of the substrate. The choice of these parameters will be different if one wishes to activate only the surface of the substrate (for example a few microns) or all the volume of the substrate.

However, the skilled in the art is perfectly able to choose these parameters in order to sufficiently activate the substrate to be grafted.

For example, a polypropylene substrate in the form of 1 mm thickness sheet irradiated with a 175 KeV electron beam at a dose of 100 KGy will be activated only on its directly exposed surface. The same sample irradiated at the same dose but with a 10 MeV electron beam will be activated in the whole substrate.

Furthermore, the choice of the dose can also be selected according to the application or the substrate used. For example, a dose of 100 KGy with a 10 MeV electron beam applied on a polypropylene substrate (1mm thickness) will damage the substrate properties whereas the same dose will be without consequence applied with a 175 keV electron beam. Polyethylene substrate can withstand radiation doses in excess of 100 kGy, without adverse effect whatever the energy of electron beam.

The polyolefin substrate is preferably irradiated during step a) with ionizing radiations at a dose rate preferably in the range of about from 30 to 100 kGy for a period of time sufficient for the formation of free radical or active sites on the polyolefin surface

After the irradiation, polypropylene can be kept at low temperature to prevent deactivation of the substrate.

The monomer mixture was prepared by mixing at least the two compounds of the invention in distilled water. Then the mixture was added to the glass reactor along with the Mohr's salt as homopolymer inhibitor.

The step of grafting (step b) was carried out into a closed reactor. The temperature ranges from 20˚ to 80˚C and is preferably about 70˚C.

The irradiated polyolefin substrate is then immersed in the mixture at selected temperature. Argon was continuously purged into the reaction mixture to create inert atmosphere. Preferably, the step b) is carried out for a time period of at least few minutes to 2 hours and preferably 15 minutes to 1 hour. After desired period, grafted polyolefin substrate was taken out and washed to avoid any traces of homopolymer.

The invention also relates to a copolymer-grafted polyolefin substrate comprising a modified surface obtained by radiation induced graft polymerization wherein :

a) the grafted copolymer comprises:

- at least a hydrophilic unsaturated monomer selected from monomers having the formula:

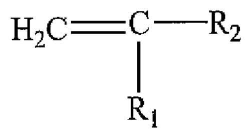

wherein $R_1$ is H or methyl, $R_2$ is -COOH, $-NH_2$, $-CON(R_{3})_2$, and $R_3$ is H or methyl,

- at least an antimicrobial agent having an average molecular weight of at least 200 $g.mol^{-1}$, and

b) the weight of graft per square centimetre of activated substrate surface ranges from 0.2 to 10 $mg/cm^2$, preferably from 1 to 6 $mg/cm^2$.

Preferably, the water contact angle of the modified substrate surface is less than 40°, preferably less than 35°, more preferably less than 30° and even more preferably about 25°.

The degree of grafting was calculated in order to control the grafted amount of comonomer. The degree of grafting was calculated according to the following equation.

$$\text{Degree of grafting (\%)} = \frac{Wg - Wo}{Wo} \times 100 \qquad \text{(Eq. 1)}$$

Where, Wo and Wg are the weights of ungrafted and grafted samples, respectively.

The degree of grafting depends on the shape of the substrate e.g. a fibre, a film, a sheet. So, to avoid any ambiguity which might be introduced by variation in substrate shape, the degree of grafting is also expressed in term of weight of graft per square centimetre of activated substrate surface (Wg) using the following relationship:

$$Wg\ (mg/cm^2) = \frac{Wg - Wo}{Sa} \qquad \text{(Eq. 2)}$$

Where, Wo and Wg are the weights of ungrafted and grafted samples, and Sa is the area of the activated substrate surface respectively.

In the case of a polypropylene sheet of 1 mm thickness irradiated with a 10 MeV electron beam at a dose of about 100 kGy, the energy of electron beam is sufficient to penetrate the entire thickness of the film. Consequently, active sites are generated throughout the substrate and in particular on the 2 faces of the sheet. Consequently, the substrate is activated on its 2 faces (the activated area of the sheet sides are neglected).

In the case of a polypropylene sheet of 1 mm thickness irradiated with a 175 keV electron beam at a dose of about 100 kGy, the energy of the electrons is insufficient to penetrate the entire thickness of the film. Consequently, active sites are generated only on 1 face of the substrate (penetration of the electron beam is only a few microns). Consequently, the substrate is activated only on one face.

The hydrophilicity of copolymer-grafted polyolefin substrate of the invention was investigated by water contact angle measurements. Generally, hydrophilic surface is a surface having a water contact angle less than 30°. Figures 2, 7, 8 and 10 clearly show that by using the specific ratio of both compounds according to the invention, the water contact angle of the surface is less than 35°, preferably less than 30° and more preferably about 25°. For instance, grafted polyolefin substrates with a mixture comprising 20% by volume of AA and 40% by volume of METAC in distilled water have low water contact angles (about 25°) and have appropriate amount of both monomers. On the contrary, grafted polyolefin substrates with a mixture comprising 50% by volume of AA and 10% by volume of METAC have high contact angles.

Under typical manufacturing conditions the preferred values of degree of grafting are normally performed by using a proportion of monomer in the mixture of about 60% by volume and preferably with 40% by volume of antimicrobial agent.

Previous researches carried out on the same substrates (1 mm sheet of polyolefin) described in the following documents Anjum, N. and al. "Surface designing of polypropylene by critical monitoring of the grafting conditions" J. Appl. Polym. Sci., 2006 and "Surface designing of polypropylene by critical monitoring of the grafting conditions: structural investigations" J. Appl. Polym. Sci., 2006, disclose that in case of surface modified by pure acrylic acid monomer, hydrophilic surfaces are obtained with a very high degree of grafting. In case of diluted acrylic acid, water acts as the vehicle for the monomer diffusion within the surface layers and therefore, the degree of grafting is high and the hydrophilicity is not convenient.

Furthermore, the grafting of antimicrobial agents onto polyolefins without using hydrophilic unsaturated monomers is very difficult so the degree of grafting is very low. For example, the grafting of a mixture of 40% by volume of METAC in distilled water leads to a degree of grafting of about $0.06 \pm 0.05\%$ (figure 9). Additionally, the reproducibility of the grafting is very poor.

Consequently, the grafting of a mixture of the two specific compounds of the invention gives very interesting results concerning the degree of grafting compared to results obtained by the grafting of the two compounds separately.

The polyolefin substrates grafted with a mixture of acid acrylic and an antimicrobial agent have a weight of graft per square centimetre of substrate activated surface between about 0.2 to 3 $mg/cm^2$. The polyolefin substrates grafted with a mixture of N, N-dimethylacrylamide and an antimicrobial agent have a weight of graft per square centimetre of substrate activated surface between about 3 to 8 $mg/cm^2$.

Zeta potential measurements have also been performed to determine the surface charge and the isoelectric point (iep). The zeta potentials were calculated on the basis of the streaming potential measurements and were used to reflect the charge state of unmodified and modified polyolefin surfaces. Isoelectric point (iep) is the point where the value of zeta potential is zero that means the total positive charges are equal to the total negative charges. Beyond iep, the zeta potential increases due to the adsorption of potential determining ions, which can also reveal the surface acidity-basicity character qualitatively.

The zeta potentials of the grafted surface can vary in a broad range according to the choice of monomers. For example, the zeta potentials at neutral and physiological water pH of a polyolefin substrate grafted with a mixture of acid acrylic and a quaternary ammonium salt are negative. The zeta potentials at physiological water pH of a polyolefin substrate grafted with a mixture of N,N-dimethylacrylamide and a quaternary ammonium salt are positive. Therefore, thanks to the invention it is possible to modulate the surface charge of the polyolefin substrate in function of the surface charge of the microorganism prone to contacting the substrate.

In order to demonstrate the efficiency of the invention, adhesion tests with *Listeria monocytogenes* bacteria have also been carried out. In the food industries *Listeria monocytogenes* is a major concern because it is responsible for several food borne diseases. Listeria monocytogenes (LM) is a gram positive bacterium and can be fatal especially for immunocompromised individuals and pregnant women. Apart from the raw food, LM has also been found on various food processing surfaces.

The observation of adhesion of LM onto modified and unmodified polyolefin substrate by electron microscopic images clearly shows that the bacterial adhesion is reduced. In fact, LM colonized the ungrafted polyolefin substrate in a monolayer rod shape structure with high density. In contrast very little LM adhesion has been observed onto grafted polyolefin substrate surface according to the invention.

Furthermore, the bacteria contacting polyolefin substrate grafted with a mixture of 20% by volume of acid acrylic and 40% by volume of quaternary ammonium salt seem to be damaged on modified surfaces (figure 5). This can be described as the modified polyolefin substrate has QAS and carboxyl groups; therefore they show antibacterial and anti-adhesion activity against LM.

Consequently, the copolymer-grafted polyolefin substrate of the invention is particularly suitable for inhibiting or preventing growth of Listeria monocytogenes. Thus the invention also relates to the use of a copolymer-grafted polyolefin substrate to inhibit or prevent growth of Listeria monocytogenes.

However, the subject of the invention is not limited to food related applications. The invention can be applied in such fields as pharmaceutical products; human hygiene products; membranes; ophthalmologic devices. Therefore, the invention also relates to the use of copolymer-grafted polyolefin substrate in food related applications and medical, pharmaceutical or cosmetic applications.

For instance, the copolymer-grafted polyolefin substrate can be a packaging material. As used herein, packaging material means any material known to those of skill in the art that can be used for packaging pharmaceutical, cosmetic, food or other consumable products.

Exemplary packaging material includes, but is not limited to, containers, vials, blister packs, bottles, tubes, inhalers, pumps, bags, tubes and any containing means.

Specific examples of product are injection solutions, eye drops, medications for internal use, medications for external use, and other pharmaceutical products; cosmetic lotions, perfumes, cosmetic creams, and other cosmetic products; and nutritional supplement drinks, beverages, fruit juices, and other food products.

According to the invention, the packaging material and more particularly at least the inner portion of the packaging material is made of, or coated by a copolymer-grafted polyolefin substrate of the invention. Thus the invention also relates to a packaging material comprising a copolymer-grafted polyolefin substrate used to store or contain a consumable product such as food, pharmaceutical, cosmetic or medical product.

## EXPERIMENTAL

### 1. Materials

Polypropylene (PP) of 1mm thickness was received from Goodfellow Cambridge Ltd. UK. (density, 0.9), Acrylic acid, N, N-dimethylacrylamide, METAC and Mohr's salt was supplied by Aldrich, Germany. Acrylic acid and METAC were used without any purification. RBS-35 was supplied by Chemical Products, Belgium. Distilled water was used for all the experiments.

Before irradiation, PP samples (30x20x1 $mm^3$) were washed with a 2% RBS-35 solution in water for 10 min at 40°C, then 5 times with tap water at 40°C and finally with distilled water at room temperature. Washed sample were dried overnight in an oven at 40°C.

In the examples, unless otherwise mentioned, all percentages and parts are by volume. All these values can be easily converted into weight ratio thanks to the densities of the used products.

The density of used products is given for information:

AA: 1.05 g/ml, DMA: 0.962, METAC: 1.105 g/ml, PEG: 1.1-1.2 g/ml.

### 2. Characterisation methods

### 1. Degree of grafting

The degree of grafting is calculated according to the following equation.

$$\text{Degree of grafting (\%)} = \frac{Wg-Wo}{Wo} \times 100 \qquad \text{(Eq. 1)}$$

where, Wo and Wg are the weights of ungrafted and grafted polypropylene sheets, respectively.
The grafted weight per square centimetre of activated substrate surface (Wg) is calculated according to the following equation.

$$Wg\ (mg/cm^2) = \frac{Wg-Wo}{Sa} \qquad \text{(Eq. 2)}$$

Where, Sa is the area of the activated substrate surface in $cm^2$.

### 2. Contact angle measurement

Contact angle measurements were carried out on KRUSS G 40 goniometer. Samples were mounted on platform and a drop of water was placed on the surface. The contact angle was measured within 30s of placing the drop on the sheet surface unless otherwise specified. An average of seven measurements was reported.

### 3. Determination of the Energetic Characteristics of Modified PP Surfaces

Contact angle measurements were carried out on KRUSS (France) G 40 goniometer with three pure liquids of known surface properties i.e. high purity water (Millipore milliQ), formamide and $\alpha$-bromonaphthelene (supplied by Sigma France). Samples were mounted on platform and a drop of appropriate liquid was placed on the surface. The contact angle was measured within 30s of placing the drop on the polypropylene surface and an average of seven measurements was reported.

The surface energetic properties of the ungrafted and grafted PP were determined by using the following equation of Young-van Oss:

$$(1 + \cos\theta)\,\gamma L = 2\,[(\gamma S^{LW}\gamma L^{LW})1/2 + 2\,(\gamma S^{+}\,\gamma L^{-})1/2 + 2\,(\gamma S^{-}\,\gamma L^{+})1/2] \quad (Eq.3)$$

where $\gamma L$ is the total surface tension, $\gamma^{LW}$ is the Lifshitz-van der Waals and $\gamma^{+}$ and $\gamma^{-}$ are the electron-acceptor/donor components of the surface of unmodified and modified PP (S) and were estimated by measuring contact angles ($\theta$) with above mentioned three pure liquids (L). The energetic characteristics of all three pure liquids are presented in Table I. The solid surface free energy was expressed in $mJ/m^2$.

Table I. Values of energetic characteristics components of pure liquids

| Pure Liquids | $\gamma^{LW}$ | $\gamma^{-}$ | $\gamma^{+}$ | $\gamma^{AB}$ | $\gamma^{T}$ |
|---|---|---|---|---|---|
| Water | 21.8 | 25.5 | 25.5 | 51.0 | 72.8 |
| α-bromonaphthalene | 40.0 | 0.0 | 0.0 | 0.0 | 40.0 |
| Formamide | 39.0 | 39.6 | 2.3 | 19.0 | 58.0 |

The contact angle values of α-bromonaphthalene with $\gamma^{-}$ and $\gamma^{+} = 0$ was used to derive $\gamma^{LW}$ while water and formamide contact angles were inserted in Eq.2 to get electron donor $\gamma^{-}$ and electron acceptor $\gamma^{+}$ components of the surface free energy respectively.

**4. Zeta Potential Measurements**

Zeta potentials (ζ) of PP sheets were determined by streaming potential measurements to get surface charge. Zeta potentials (ζ) were determined using a Zetacad from CAD Instrumentation®, France. The concentration of NaCl solution was $1.5\times10^{-3}$ M. The pH of the solution was adjusted within the range of 2-10 by adding KOH or $HNO_3$. Zeta potential was measured through streaming potential method described by Van Wagenen et al. Streaming potential ΔE was measured at a driving pressure ΔP, which varies from 50 to 110 mBar. The measurements were repeated six times for each pressure that means three times for one flow direction and three times in the reverse flow direction. The streaming potential depends both on the surface charge in the diffuse layer and the electrolyte properties i.e. conductivity Ksol, viscosity η and dielectric constant D. For flat surface like PP sheets, streaming potential (ΔE) is related to zeta potential, so by knowing ΔE, zeta potential (ζ) can be calculated by the following equation:

$$\zeta = \frac{4\pi\eta}{D}\left(K_{sol} + \frac{L_{surf}}{b}\right)\frac{\Delta E}{\Delta P} \quad (Eq. 4)$$

where, Lsurf represents the specific conductance at the surface of shear and b the half distance between the two samples. The value of b was 0.05 mm in our experimental setup.

**5. X-ray Photoelectron Spectroscopy (XPS)**

XPS measurements were made using ESCALAB 250 equipped with a nonchromatized AlK∝ Xray source from Electron Corporation. The analysis was carried out under UHV of $6\times10^{-9}$ mbar and for erosion $8\times10^{-8}$ mbar UHV was used. Argon flow was added in the ion gun.

### *6. Observation of bacterial adhesion by electron microscopy*

Adhesion of Listeria monocytogenes was observed by electron microscopic images. The strain of Listeria monocytogenes CIP 103574 (N˚ UBHM 152) used in this study was provided by UBHM (INRA, France). Bacterial cells were stored in a biofreezer at -80˚C prior to the experiments. The strains were subcultured twice, and then cultivated for 24 h at 20˚C in BHI (brain heart infusion, Oxoid) under oxygenated conditions until the stationary stage was reached. For the preparation of bacterial suspension, the cells were harvested by centrifugation for 10 min at 7000 x g and 4˚C and then washed twice with, and resuspended in the sterile suspending liquid (1.5 x $10^{-3}$ mol.$l^{-1}$ NaCl).

Listeria monocytogenes cells adhering to inert surfaces were visualised by field emission scanning electron microscopy (FESEM). Before analysis, each sample was rinsed with 150 ml of demineralised water, fixed with 3% glutaraldehyde for 1 h and washed three times with sodium cacodylate (0.2 mol.$l^{-1}$, pH 7.4). Further fixing with 1% osmium tetroxide for 1hour at 4˚C was the performed. The samples were washed with sodium cacodylate and then dehydrated by passage through a graded series of ethanol/water solutions from 50 to 100%. The samples then remained desiccated before gold/platinum sputtering and viewing as secondary electron images (8 kV) with a Hitachi S4500 FESEM

## EXAMPLE 1: Influence of monomer concentration

### 1. Irradiation and grafting Reaction

Electron beam (Linear electron accelerator CIRCE II) was used for the irradiation of polypropylene sheets. The energy of electron beam was 10 MeV and the power was 20 kW with the speed of 0.44 m/min (IONISOS laboratory, Orsay, France). The irradiation was carried out in air for the dose of 100 kGy. Samples were exposed twice for the irradiation (dose of 50 kGy each). After the irradiation, polypropylene sheets were kept at -80˚C prior to the grafting reaction.

Grafting reaction was carried out in a closed reactor. The monomer solution was prepared by mixing a mixture of two monomers AA and METAC (received from Aldrich, Germany) in distilled water (monomers were used without any purification). The required amount of monomer solution was added to the glass reactor along with the Mohr's salt as homopolymer inhibitor. The reactor was placed in an oven at 70˚C. Electron beam irradiated PP sheet (100 kGy) was placed in the monomer solution in a closed reactor. Argon was continuously purged into the reaction mixture to create inert atmosphere. After desired period, grafted PP sample was taken out and washed with distilled water in ultrasonic water bath at 40˚C for 15 minutes to avoid any traces of homopolymer. Grafted PP samples were dried overnight in an oven at 40˚C.

Different ratio of each monomer (AA:METAC) in distilled water were tested such as 50:10, 40:20, 30:30, 20: 40, 10:50 and denoted as M-1, M-2, M-3, M-4 and M-5 respectively.

For comparison, mixture comprising 40% of METAC in distilled water denoted METAC-40 and mixture comprising 20% of AA in distilled water denoted AA-20 were also tested.

### 2. Results

### 1. Degree of grafting and surface hydrophilicity

The effect of each monomer composition in comonomer mixture with time on the degree of grafting is shown in Figure 1 and the contact angle measurements on virgin, exposed and grafted PP are presented in Table I and Figure 2.

Table I. Values of contact angle measurements with water on virgin, exposed and grafted PP

| Monomer Concentration (%) | Reaction time (min) | Degree of Grafting (%) | Gw ($mg/cm^2$) | Contact Angle (Degree) |
|---|---|---|---|---|
| Virgin PP | 0 | 0.0 | 0 | 90.0 ± 3.4 |
| Exposed PP | 0 | 0.0 | 0 | 89.5 ± 5.6 |
| AA: METAC M-1 : 50:10 | 5 | 1.0 | 0.45 | 59.4 ± 1.9 |
| | 10 | 2.3 | 1.03 | 54.7 ± 0.0 |
| | 15 | 2.5 | 1.12 | 53.3 ± 2.2 |
| | 20 | 3.4 | 1.53 | 54.6 ± 3.8 |
| | 30 | 4.5 | 2.02 | 52.5 ± 1.7 |
| | 40 | 4.9 | 2.20 | 50.6 ± 0.7 |

(continued)

| Monomer Concentration (%) | Reaction time (min) | Degree of Grafting (%) | Gw (mg/cm$^2$) | Contact Angle (Degree) |
|---|---|---|---|---|
| | 60 | 7.0 | 3.15 | 50.5 ± 0.3 |
| M-2 : 40:20 | 5 | 0.8 | 0.36 | 57.6 ± 2.8 |
| | 10 | 1.9 | 0.85 | 55.0 ± 0.8 |
| | 15 | 2.7 | 1.21 | 55.0 ± 2.3 |
| | 20 | 3.3 | 1.48 | 54.4 ± 0.0 |
| | 30 | 4.6 | 2.07 | 54.5 ± 0.9 |
| | 40 | 5.0 | 2.25 | 49.2 ± 0.1 |
| | 60 | 6.7 | 3.01 | 47.9 ± 1.0 |
| M-3 : 30:30 | 5 | 1.1 | 0.49 | 49.2 ± 3.2 |
| | 10 | 2.0 | 0.9 | 32.0 ± 0.2 |
| | 30 | 4.2 | 1.89 | 25.6 ± 2.3 |
| | 40 | 5.0 | 2.25 | 23.1 ± 0.4 |
| | 60 | 5.9 | 2.65 | 23.3 ± 2.3 |
| M-4 : 20:40 | 5 | 0.2 | 0.09 | 60.1 ± 1.4 |
| | 10 | 0.6 | 0.27 | 34.0 ± 0.7 |
| | 15 | 1.1 | 0.49 | 34.9 ± 4.0 |
| | 20 | 1.6 | 0.72 | 25.1 ± 1.0 |
| | 30 | 2.7 | 1.21 | 22.0 ± 0.7 |
| | 40 | 3.6 | 1.62 | 23.9 ± 0.7 |
| | 60 | 3.7 | 1.66 | 20.4 ± 1.1 |
| M-5 : 10:50 | 5 | 0.04 | 0.02 | 70.0 ± 5.5 |
| | 15 | 0.1 | 0.04 | 51.5 ± 4.9 |
| | 20 | 0.3 | 0.13 | 43.4 ± 0.6 |
| | 30 | 0.4 | 0.18 | 43.0 ± 2.2 |
| | 40 | 0.7 | 0.31 | 34.2 ± 3.9 |
| | 60 | 1.0 | 0.45 | 26.0 ± 2.6 |

The degree of grafting increases with the increase in AA proportion in comonomer mixtures with time. However a decreasing trend in the degree of grafting has been observed with the increase in METAC concentration in comonomer mixtures. This can be clearly seen especially in the comonomer ratio of AA: METAC (20:40) and (10:50).

The decrease in the degree of grafting may be due to the fact that when the proportion of METAC in comonomer mixtures increases the viscosity of reaction medium also increases, as the viscosity of METAC is higher than AA. It may be assumed that when the viscosity of monomer solution is higher the monomer chains are less mobile, so less monomer is available at the grafting sites for the grafting reaction. Hence degree of grafting decreases. Another reason could be that when the viscosity of monomer solution is higher there is no swelling of the grafted layers so that monomer could not diffuse within the polymer bulk.

In the present investigation, the viscosity of the comonomer solution in the presence of METAC is such that the swelling of grafted layers and monomer diffusion through these grafted layers are inhibited, resulting to the decrease in the degree of grafting.

It could be surprising that contact angle increases as we increase the ratio of AA in the comonomer mixtures. This may be due to the dilution of monomer. When the ratio of METAC is lower the viscosity of the monomer solution is also lower, so the diffusion of monomer within the surface layers is easier as compared to the one where the ratio of METAC is higher. The increase of the viscosity slow down the diffusion of monomer inside the surface layers and ensure grafts on the surface of polypropylene. Hence decrease of the water contact angle was due to the presence of hydrophilic METAC on the surface and no diffusion of AA.

The results in table 1 clearly demonstrate that the advantageous hydrophilicity is obtained for a ratio AA: METAC comprised between 40:20 and 10:50 and more particularly 20:40. The samples grafted with this specific ratio show water contact angle as low as 22° and have appropriate amount of both monomers.

**2. Individual effect of each monomer on the degree of grafting**

Table II. Values of contact angle measurements with water on virgin, exposed and grafted PP

| Monomer Concentration (%) | Degree of Grafting (%) | Grafted weight per unit of activated surface ($mg/cm^2$) | Contact Angle (Degree) |
|---|---|---|---|
| Virgin PP | 0.0 | 0 | 90.0 ± 3.4 |
| Exposed PP | 0.0 | 0 | 89.5 ± 5.6 |
| AA-20 | 1.9 | 0.85 | 59.0 ± 6.6 |
| METAC-40 | 0.09 | 0.04 | 28.0 ± 0.09 |
| M-4 20:40 | 2.7 | 1.21 | 22.0 ± 0.7 |

In the presence of comonomer mixture [AA (20%): METAC (40%)], degree of grafting was found to be higher as compare to the grafting, which has been taken place under both monomers individually. It seems that the presence of AA in the comonomer mixture facilitates the grafting of METAC.

Moreover, METAC-40 modified PP surfaces show almost similar wettability as M-4 modified samples. In reverse AA-20 grafted PP surfaces exhibit higher water contact angle as compare to M-4 and METAC -40 modified PP surfaces. It may be assumed that in the grafted sample METAC is present at the interface of the sample and AA is in the sub layers of the surface. This may be the reason of lower value of contact angle grafted with comonomer mixture.

**3. XPS spectrum of virgin, exposed and grafted PP**

Table III: XPS elemental composition of C1s, O1s and N1s

| Sample | Grafting (%) | C1s(%) | O1s (%) | N1s (%) | Cl2p (%) | O1s/C1s | N1s/C1s |
|---|---|---|---|---|---|---|---|
| Virgin PP | - | 95.2 (100)* | 4.8 | - | - | 0.05 | - |
| Exposed PP | - | 92.7 (100)* | 6.4 | - | - | 0.06 | - |
| PP graft with METAC (40%) | 0.03 | 72.8 ± 1.2 (66.6)* | 17.6 ± 0.9 (16.8)* | 5.9 ± 0.6 (8.3)* | 3.8 ± 0.7 (8.3)* | 0.23 (0.25)* | 0.08 (0.12)* |
| PP graft with AA+METAC (20% + 40%) | 2.7 | 75.9 ± 1.6 (65.6)* | 18.3 ± 1.4 (20.6)* | 4.8 ± 0.2 (6.8)* | 0.3± .006 (6.8)* | 0.24 (0.31)* | 0.06 (0.10)* |
| *Calculated value | | | | | | | |

The spectrum of virgin PP reveals the presence of carbon signal, however in spite of the paraffinic nature of PP oxygen signal is also there. The presence of oxygen may be due to the thermo-oxidative degradation and the surface oxidation of the polypropylene during storage or it can be due to the environmental contamination.

Grafting of METAC leads to the origin of an additional peak of nitrogen, this shows the presence of METAC on the surface. When the grafting was performed in a comonomer mixture of AA (20%) and METAC (40%), the same additional peak is observed but the O1s content increases and N1s content decreases. However the difference is not significant in both the spectra.

**4. XPS imaging elemental distribution of nitrogen**

XPS imaging enables mapping of the distribution of particular elements or functional group on a surface. Conventional XPS provides an average composition over the analyzed area. However, many sample surfaces are not

homogeneous and an element present at apparently low concentration in the spectrum may be concentrated in one region of the area of interest, possibly leading to a completely different interpretation of the data. That is why XPS imaging on grafted PP sample to map the elemental distribution of nitrogen was carried out as shown in Figure 3.

Each resultant image pixel represents the peak height of the imaged nitrogen (N) species at that spatial position. Thus a set of images can be quantified pixel by pixel in an analogous manner to the quantification of the spectra. This means, on the grafted sample (Figure 3), we have obtained a surface with an almost homogenous finish of nitrogen. This indicates that in our experimental system, grafting takes place in a homogenous manner.

**5. Surface energetic characteristics of modified surface**

Table IV. Values of contact angle measurements by using three pure liquids (water, formamide and α-bromonaphthelene) on ungrafted and grafted PP

| Sample | Grafting (%) | Contact Angle (degree) | | |
|---|---|---|---|---|
| | | Water | Formamide | α-bromonaphthalene |
| Virgin PP | 0.0 | 90.0 | 75.1 | 45.2 |
| Exposed PP | 0.0 | 90.0 | 78.1 | 41.4 |
| M-1 PP-*g*-AA: METAC 50:10 | 2.4 | 53.2 | 26.0 | 28.1 |
| M-2 PP-*g*-AA: METAC 40:20 | 1.9 | 55.0 | 23.0 | 25.1 |
| M-3 PP-*g*-AA: METAC 30:30 | 2.0 | 32.6 | 21.2 | 26.9 |
| M-4 PP-*g*-AA: METAC 20:40 | 2.3 | 21.9 | 25.2 | 20.7 |
| M-5 PP-*g*-AA: METAC 10:50 | 1.2 | 25.5 | 21.5 | 30.5 |
| PP-*g*-AA-20 | 1.8 | 59.0 | 20.0* | 20.0 |
| PP-*g*-METAC-40 | 0.07 | 28.0 | 20.0* | 40.0 |
| PP-*g*-100% AA | 8.0 | 28.6 | 20.0* | 24.2 |
| *Formamide contact angle shows complete hydrophilicity for the PP modified with METAC and AA individually. It is to be noted that we put 20˚, as the value of contact angle to show complete hydrophilicity, as the real value was too small or even was not possible to measure the contact angle. | | | | |

Table V. Surface energetic characteristic components of ungrafted and grafted PP

| Sample | $\gamma^{LW}$ (mJ/m$^2$) | $\gamma^+$ (mJ/m$^2$) | $\gamma^-$ (mJ/m$^2$) | $\gamma^{AB}$ (mJ/m$^2$) |
|---|---|---|---|---|
| Virgin PP | 29. 0 | 0.01 | 5.55 | 0.57 |
| Exposed PP | 30.6 | 0.35 | 7.56 | 3.27 |
| PP-*g*-20% AA | 37.5 | 4.36 | 10.18 | 13.24 |
| PP-*g*-40% METAC | 31.1 | 3.29 | 43.46 | 23.92 |
| PP-*g*-100% AA | 36.56 | 1.81 | 43.55 | 17.79 |
| PP-*g*-AA: METAC (50%:10%) | 35.43 | 3.36 | 17.57 | 15.4 |
| PP-*g*-AA:METAC (40%:20%) | 36.3 | 3.78 | 14.63 | 14.89 |
| PP-*g*-AA:METAC (30%:30%) | 35.72 | 2.1 | 39.56 | 18.2 |

(continued)

| Sample | $\gamma^{LW}$ (mJ/m$^2$) | $\gamma^+$ (mJ/m$^2$) | $\gamma^-$ (mJ/m$^2$) | $\gamma^{AB}$ (mJ/m$^2$) |
|---|---|---|---|---|
| PP-*g*-AA:METAC (20%:40%) | 37.5 | 1.42 | 47.28 | 16.43 |
| PP-*g*-AA:METAC (10%:50%) | 34.82 | 1.94 | 47.5 | 19.21 |

The electron donor component $\gamma^-$ was shown to vary greatly from 5.5 mJ/m$^2$ for unmodified to 10.18-47.28 mJ/m$^2$ for modified PP surfaces. This suggested that PP samples grafted with AA-20 show moderately hydrophilic character, while grafting with METAC-40 exhibited hydrophilic and surprisingly, basic character. For the grafted samples with a mixture of these two monomers the value of $\gamma^-$ increases with the increase of METAC ratio in the comonomer mixture indicating the increase in the hydrophilicity and basic nature.

**6. Potential Zeta**

Figure 4 shows Zeta potential of ungrafted and grafted polypropylene. The variation of zeta potential with pH indicates that $H^+$ and $OH^-$ ions are potential determining ions. They are ionic species of the aqueous medium, which actually interact with the surface. Depending on the acid-base character of the surface, the group present on the surface may gain or lose a proton according to the pH value of the aqueous phase.

Table VI: Values of zeta potential at neutral and physiologic water pH and iep of ungrafted and grafted PP

| Sample | ζ (mV) at neutral pH | ζ (mV) at physiologic water | iep |
|---|---|---|---|
| Virgin PP | -40.0 | -33.0 | 3.3 |
| Exposed PP | -43.0 | -33.0 | 2.6 |
| PP-*g*-AA-20% | -27.0 | -23.0 | 3.7 |
| M-4 PP-*g*-METAC-40 | +27.5 | +30.0. | - |
| PP-g-AA: M ETAC (20%:40%) | -16.0 | -15.0 | 5.2 |

The negative zeta potential of virgin PP and exposed PP may be due to the processing of PP at elevated temperature, which causes the thermal degradation or partial oxidation of PP during storage and contamination on the PP surface. In that case, the behaviour of negative charge on exposed PP would be different than the negative charge of grafted PP caused by carboxylic groups.

The iep of comonomer mixture (M-4) grafted PP surfaces is 5.2. At neutral and physiologic water pH, the values of zeta potentials are negative. Here one can assume that above the iep the negatively charged surfaces are generated by acidic functional group such as carboxylic groups while below the iep, presence of basic functional group is responsible for positive charge. However, the above modified surfaces have much stronger positive charge at acidic conditions than negative charge at alkaline conditions. This could suggest that the modified surfaces may have a higher density of METAC than carboxylic groups. These results can be correlated with the contact angle measurements, where the PP grafted with comonomer mixture (M-4) and METAC-40, exhibit almost identical wettability, whereas PP grafted with AA-20 shows different behaviour of wettability. Moreover, PP surfaces grafted with comonomer mixture (M-4) and METAC-40 also have the identical maximum value of zeta potential in acidic pH.

**7. Observation of LM by electron microscopy**

Adhesion of LM was observed by electron microscopic images on unmodified and modified polymeric surfaces having different surface characteristics.

Bacterial adhesion with solid substrate is thought to be governed as a result of different parameters present in the suspension medium such as positively-negatively charged ions in solution, the charge on the bacterial wall and the acid/base sites on the polymeric surface. Therefore it is important to know the surface characteristics of Listeria monocytogenes (LM) and polymeric surfaces we used for bacterial adhesion test. It can be seen that LM exhibits highly negative charge and electron donor ($\gamma^-$) character i.e. hydrophilic nature. According to characteristics of LM we have modified the PP surface by radiation grafting of comonomer mixture.

The EM images of LM adhesion experiments performed on unmodified and modified PP surfaces are shown in Fig. 5a and 5b. The extent of bacterial adhesion seems to be higher in the case of exposed than the PP, which is grafted with comonomer mixture (M-4). The different adhesion trend may be explained taking into account the hydrophilicity and the presence of an acid-base interaction.

It is well known that the adhesion should be higher on hydrophobic than on hydrophilic surfaces. We can correlate these assumptions with our contact angle results, which show that exposed PP has hydrophobic while the above grafted samples exhibit highly hydrophilic surface.

These results can also be explained that when the interacting surfaces are highly hydrophilic, the acid-base interactions lead to hydrophilic repulsion, whereas in the case of strongly hydrophobic interacting surface long-rang hydrophobic attraction occurs.

Comonomer grafted PP and LM have shown hydrophilic nature, leading to the repulsive interaction, which results less adhesion. Furthermore, the comonomer grafted PP and LM have presented higher value of electron donor character. Therefore, we can assume the repulsive interaction between them, which lowers the bacterial adhesion on the grafted PP.

Additionally, Fig. 5a shows that LM colonized the exposed PP sheets evenly in a monolayer rod shape structure with high density. In contrast very little LM adhesion has been observed on comonomer grafted PP sheets. Furthermore the bacterium seems to be damaged on modified surfaces. This can be described as the comonomer modified PP has QAS and carboxyl groups; therefore they show antibacterial and repulsive (anti-adhesion) activity against LM.

**EXAMPLE 2: Influence of hydrophilic unsaturated monomer**

In this example, the water contact angles were measured immediately after placing the drop on the sheet surface.

**1. Irradiation and grafting reaction**

Electron beam (Low energy electron accelerator LAB UNIT- Energy Science®) was used for the irradiation of PP sheets. The energy of electron beam was 175 KeV, with an intensity of 5mA. The irradiation was carried out in air for the dose of 100 kGy. After the irradiation, PP sheets were kept at -80˚C in liquid nitrogen prior to the grafting reaction.

Grafting reaction was carried out in a closed reactor. The mix monomers, water and Mohr's salt was added in the reactor placed at 70˚C in an oven during 20 minutes to heat the solution. Irradiated PP sheet was placed after this time, in the reactor. Argon was continuously purged into the reaction mixture to create inert atmosphere. After 15 minutes, grafted PP sample was taken out and placed in distilled water in sonic bath (Bioblock® Scientific 86480) at 40˚C during 10 minutes. Grafted PP sample was dried overnight in an oven at 40˚C.

Mixtures comprising different ratio by volume of METAC and AA or DMA have been tested.

**2. Results**

**1. Degree of grafting**

Figure 6 shows the individual effect of AA and DMA on the degree of grafting for a 30 min reaction time. Contrary to AA, the degree of grafting of DMA is proportional to the ratio of monomer in the reaction medium. This may be due to the viscosity of DMA which is higher than the viscosity of AA and which limits its diffusion in the polyolefin substrate. No permeation of monomer seems occur in the polyolefin substrate.

Figures 7 and 8 shows for different ratio of comonomer mixtures [AA : METAC] and [DMA : METAC] the variation of water contact angles with the reaction time. For a particular ratio [AA : METAC] and [DMA : METAC], the value of water contact angle is stabilized after a time of contact between the activated substrate and the mixture of monomer. In the case of polypropylene activated according to the following conditions : Preirradiation dose, 100kGy,; Energy of electron beam, 175 KeV; Temperature, 70˚C; Mohr'salt, 0.25%; the equilibrium state is reached for a reaction time of about 40 minutes.

Tables VI and VII shows for different ratio of comonomer mixtures [AA : METAC] and [DMA : METAC] and for a 40 minutes reaction time the variation of the degree of grafting and of the grafted weight per square centimetre of activated substrate surface. The polyolefin substrates grafted with a mixture [AA : METAC] have weight of graft per square centimetre of substrate activated surface between about 0.2 to 3 mg/cm$^2$. The polyolefin substrates grafted with a mixture [DMA : METAC] have weight of graft per square centimetre of substrate activated surface between about 3 to 8 mg/cm$^2$.

Table VII. Values of degree of grafting with different ratio of comonomer mixtures [AA : METAC]

| Monomer | Degree of Grafting (%) | Gw (mg/cm$^2$) |
|---|---|---|
| 40 % AA + 20 % METAC | 3.14 | 2.82 |

(continued)

| Monomer | Degree of Grafting (%) | Gw ($mg/cm^2$) |
|---|---|---|
| 30 % AA + 30 % METAC | 2.05 | 1.84 |
| 20 % AA + 40 % METAC | 1.34 | 1.20 |
| 10 % AA + 50 % METAC | 0.35 | 0.31 |

Table VII. Values of degree of grafting with different ratio of comonomer mixtures [AA : METAC]

| Monomer | Degree of Grafting (%) | Gw ($mg/cm^2$) |
|---|---|---|
| 40 % DMA + 20 % METAC | 7.79 | 7.01 |
| 30 % DMA + 30 % METAC | 5.86 | 5.27 |
| 20 % DMA + 40 % METAC | 3.37 | 3.03 |

**2. Individual effect of each monomer on the degree of grafting**

Table IX. Values of contact angle measurements with water on grafted PP with different ratio of comonomer mixtures [AA : METAC] and [DMA : METAC], reaction time 40 min.

| Monomer Concentration (%) | Degree of Grafting (%) | Gw ($mg/cm^2$) | Contact Angle (Degree) |
|---|---|---|---|
| 20 % AA | 0.525 | 0.47 | 56.96 |
| 40% METAC | 0 | 0 | 27.63 |
| 20 % AA + 40 % METAC | 1.34 | 1.21 | 25.68 |
| 20 % DMA | 1.49 | 1.34 | 38.96 |
| 20 % DMA + 40 % METAC | 3.37 | 3.03 | 25.25 |

Figure 9 and table VIII shows the very low degree of grafting of METAC individually. This may be due to different parameters: the very high viscosity of METAC, the sterically hindered environment of METAC and/or the surface properties of PP (non polar and hydrophobic substrate).

In the presence of comonomer mixture [AA (20%): METAC (40%)] or [DMA (20%): METAC (40%)], degree of grafting was found to be higher as compare to the grafting which has been taken place under both monomers individually. It seems that the presence of very reactive hydrophilic compounds (AA or DMA) in the comonomer mixture facilitates the grafting of METAC.

These results are also obtained in the presence of comonomer mixture [AA (30%): METAC (30%)] or [DMA (30%): METAC (30%)] (figures 11 and 12).

The values of water contact angle reinforce this assumption. Indeed, the water contact angle of PP grafted with 20% of AA or DMA in distilled water is about 57 and 39° respectively.

The water contact angle of PP grafted with 40% of METAC in distilled water is about 27°. The water contact angle of PP grafted with a mixture of 40% of METAC and 20% of AA or DMA in distilled water is about 25°. So water contact angles of grafted PP with mixtures of [AA:METAC] and [DMA:METAC] are very close to water contact angle of PP grafted with METAC individually. This could suggest that the METAC is preferentially on the surface of the substrate.

**3. XPS spectrum of virgin, exposed and grafted PP**

Table X: XPS spectrum of virgin, exposed and grafted polypropylene with AA, DMA and comonomer mixtures of [AA : METAC] and [DMA : METAC]

| Sample | C1s (%) | O1s (%) | O1s/C1s | N1s (%) | N1s/C1s | C12p (%) |
|---|---|---|---|---|---|---|
| Virgin PP | 100*<br>95.24 | 0*<br>4.76 | 0*<br>0.04 | - | - | - |
| PP graft with DMA | 71.4*<br>73.69 | 14.3*<br>12.47 | 0.2*<br>0.17 | 14.3*<br>12.73 | 0.2*<br>0.7 | - |
| PP graft with DMA+METAC (20%+40%) | 67.7*<br>72.28 | 16.1*<br>13.63 | 0.23*<br>0.19 | 9.67*<br>9.5 | 0.14*<br>0.13 | 6.45*<br>4.6 |
| PP graft with AA | 60*<br>71.4 | 40*<br>27.67 | 0.66*<br>0.38 | - | - | - |
| PP graft with AA+METAC (20% + 40%) | 65.5*<br>69.82 | 20.6*<br>20.55 | 0.31*<br>0.29 | 6.8*<br>5.1 | 0.1*<br>0.07 | 6.8*<br>3.08 |
| * Calculated value | | | | | | |

The calculated elemental composition is of the same order of magnitude than the experimental elemental composition. This result could suggest that there is a good correlation between the percentage of monomers in the reaction medium and the percentage of monomers grafted onto the substrate surface.

**4. Potential Zeta**

Table XI: Values of zeta potential and iep of ungrafted and grafted PP

| | Virgin PP | AA | DMA | METAC | [AA/METAC] [20/40] v/v | [DMA/METAC] [20/40] v/v |
|---|---|---|---|---|---|---|
| % grafting | 0 | 4.45 ± 0.2 | 2.4 ± 0.5 | 0.06 ± 0.05 | 1.4 ± 0.5 | 1.26 ± 0.2 |
| Water contact angle (Hydrophilicity) | 95 ± 3 | 42 ± 1.6 | 34 ± 2.2 | 28 ± 8 | 22 ± 0.7 | 22.3 ± 1.5 |
| ζ (mV) (at pH=6) | -33 | -12 | -16 | + 30 | -10 | 9.9 |
| pHi | 3.3 | 2.2 | 2.9 | >10 | 5.2 | >10 |

PPs grafted with two hydrophilic monomers of the invention have very different values of iep and ζ for the same hydrophilicity.

**EXAMPLE 3: Influence of the kind of substrate**

**1. Irradiation and grafting reaction**

The tests were carried out with two polyolefins and one saturated polyester, polypropylene (PP), polyethylene (PEHD) and polyethylene terephtalate (PET) of 1 mm thickness received from Goodfellow Cambridge Ltd., UK.
Electron beam (Low energy electron accelerator LAB UNIT- Energy Science®) was used for the irradiation of PP sheets. The energy of electron beam was 175 KeV, with an intensity of 5mA. The irradiation was carried out in air for the dose of 100 kGy. After the irradiation, PP sheets were kept at -80°C in liquid nitrogen prior to the grafting reaction.
Mixtures comprising 40% by volume of METAC and 20% by volume of AA are used.
Grafting reaction was carried out in a closed reactor. The mix monomers, water and Mohr's salt was added in

the reactor placed at 70˚C in an oven during 20 minutes to heat the solution. Irradiated substrate was placed after this time, in the reactor. Argon was continuously purged into the reaction mixture to create inert atmosphere. After 30 minutes, grafted PP sample was taken out and placed in distilled water in sonic bath (Bioblock® Scientific 86480) at 40˚C during 10 minutes. Grafted PP sample was dried overnight in an oven at 40˚C.

**2. Results**

Table XII: Values of contact angle measurements with different kind of substrate

| | Grafting % | Contact angle (degree) |
|---|---|---|
| **PP** | 1.1 ± 0.1 | 24.05 |
| **PE** | 1.7 ± 0.1 | 26.70 |
| **PET** | 0.33 | 66.57 |

These results clearly show a suitable degree of grafting for the polyolefins (polypropylene and polyethylene) in opposition to the PET for which the degree of grafting is very low and consequently the value of water contact angle is very high.

## Claims

**1.** A method for grafting a copolymer onto a polyolefin substrate wherein the said method comprises the following steps :

(a) irradiating the said substrate with ionizing radiation to obtain an activated polyolefin substrate,
(b) bringing into contact the activated polyolefin substrate with a mixture of at least two compounds in distilled water comprising:

(i) from 10 to 40% by volume, related to the total volume of the reaction medium, of a hydrophilic unsaturated monomer selected from monomers having the formula:

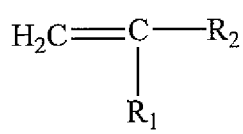

wherein $R_1$ is H or methyl, $R_2$ is -COOH, -$NH_2$, -$CON(R_3)_2$, and $R_3$ is H or methyl,
(ii) from 20 to 50% by volume, related to the total volume of the reaction medium, of an antimicrobial agent having an average molecular weight of at least 200 $g.mol^{-1}$,

to thereby form a copolymer-grafted polyolefin substrate.

**2.** The method according to claim 1 wherein the polyolefin substrate comprises a polyolefin selected from the group consisting of polyethylene, polypropylene, polyisobutylene and polymethylpentene, mixtures and copolymers thereof.

**3.** The method according to claim 1 wherein the said polyolefin is polypropylene.

**4.** The method according to claim 1 wherein the said polyolefin is polyethylene.

**5.** The method according to any one of claims 1 to 3 wherein the said polyolefin substrate is in the form of a sheet, a film, a fibre or a fabric.

**6.** The method according to any one of claims 1 to 5 wherein the said hydrophilic unsaturated monomer is acrylic acid.

**7.** The method according to claim 6 wherein step b) is performed with a mixture of the at least two compounds in distilled water comprising :

a) from 10 to 30 % by volume of acrylic acid,
b) from 30 to 50% by volume of an antimicrobial agent.

**8.** The method according to any one of claims 1 to 5 wherein the said hydrophilic unsaturated monomer is N,N-dimethylacrylamide.

**9.** The method according to claim 8 wherein step b) is performed with a mixture of the at least two compounds in distilled water comprising :

a) from 20 to 40 % by volume of N,N-dimethylacrylamide,
b) from 20 to 40 % by volume of an antimicrobial agent.

**10.** The method according to any one of the preceding claims
wherein step b) is performed with a mixture of the at least two compounds in distilled water comprising :

a) about 20% by volume of a hydrophilic unsaturated monomer,
b) about 40% by volume of an antimicrobial agent.

**11.** The method according to any one of the preceding claims
wherein the said antimicrobial agent is a compound having a biocide, bacteriostatic and/or repellent activity.

**12.** The method according to claim 11 wherein the said antimicrobial agent having a biocide or a bacteriostatic activity is an ammonium quaternary salt.

**13.** The method according to claim 12 wherein the said ammonium quaternary salt is [2-(Methacryloyloxy)ethyl] trimethylammonium chloride.

**14.** The method according to claim 11 wherein the said antimicrobial monomer having a repellent activity is terminally-functionalized-polyalkylene glycol.

**15.** The method according to claim 14 wherein the said polyalkylene glycol is polyethylene glycol.

**16.** The method according to any one of claims 14 and 15
wherein the said terminally-functionalized-polyethylene glycol is selected from the group of vinyl and allyl ethers of polyethylene glycol, acrylate and methacrylate esters of polyethylene glycol.

**17.** The method according to any one of claims 14 to 16 wherein the polyalkylene glycol has a molecular weight from 200 to about 10,000.

**18.** The method according to claim 17 wherein the polyalkylene glycol is a polyethylene glycol having a molecular weight of at least 2,000.

**19.** The method according to any one of the preceding claims
wherein the activated material is kept at -80˚C prior to performing step (b).

**20.** The method according to any one of the preceding claims which further comprises a washing step c) after grafting reaction wherein residual monomers are removed from the surface, wherein the copolymer-grafted polyolefin substrate is washed with distilled water in ultrasonic water bath at 40˚C for 15 minutes.

**21.** The method according to any one of the preceding claims which further comprises a drying step d) wherein the copolymer-grafted polyolefin substrate is dried overnight in an air oven at 40˚C.

**22.** The method according to any one of the preceding claims

wherein, at step b), the concentration of monomers in the mixture ranges from 40 to 70% by volume, preferably about 60% by volume.

**23.** The method according to any one of the preceding claims wherein, at step b), the mixture further comprises a homopolymer inhibitor selected among inorganic salts of polyvalent metals, notably ferrous ammonium sulphate and/or copper chloride.

**24.** The method according to claim 21 wherein the homopolymer inhibitor is Mohr's salt.

**25.** The method according to any one of the preceding claims wherein step b) is performed into a closed reactor.

**26.** The method according to any one of the preceding claims wherein step b) is performed at a temperature of about 70°C.

**27.** The method according to any one of the preceding claims wherein step b) is performed under inert atmosphere.

**28.** The method according to any one of the preceding claims wherein step (b) is carried out for a time period of at least few minutes to 2 hours and preferably 15 minutes to 1 hour.

**29.** A copolymer-grafted polyolefin substrate comprising a modified surface obtained by radiation induced graft polymerization
wherein :

a) the grafted copolymercomprises:

- at least a hydrophilic unsaturated monomer selected from monomers having the formula:

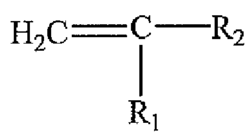

wherein $R_1$ is H or methyl, $R_2$ is -COOH, $-NH_2$, $-CON(R_3)_2$, and $R_3$ is H or methyl,

- at least an antimicrobial agent having an average molecular weight of at least 200 $g.mol^{-1}$, and

b) the weight of graft per square centimetre of activated substrate surface ranges from 0.2 to 10 $mg/cm^2$, preferably from 1 to 6 $mg/cm^2$.

**30.** The polyolefin substrate according to claim 29 wherein the water contact angle of the modified substrate surface is less than 40°, preferably less than 35°, more preferably less than 30° and even more preferably about 25°.

**31.** The polyolefin substrate according to any one of claims 29 to 30 wherein the polyolefin substrate comprises a polyolefin selected from the group consisting of polyethylene, polypropylene, polyisobutylene and polymethylpentene, mixtures and copolymers thereof.

**32.** The polyolefin substrate according to any one of claims 29 to 31 wherein the said polyolefin substrate is in the form of a sheet, a film, a fibre or a fabric.

**33.** The polyolefin substrate according to any one of claims 29 to 32 wherein the said hydrophilic unsaturated monomer is acrylic acid.

**34.** The polyolefin substrate according to claim 33 wherein the weight of graft per square centimetre of activated substrate surface ranges from 0.2 to 3 $mg/cm^2$.

**35.** The polyolefin substrate according to any one of claims 29 to 32 wherein the said hydrophilic unsaturated monomer is N,N-dimethylacrylamide.

**36.** The polyolefin substrate according to claim 35 wherein the weight of graft per square centimetre of activated substrate surface ranges from 3 to 8 $mg/cm^2$.

**37.** Use of a copolymer-grafted polyolefin substrate according to any one of claims 29 to 36 in food related applications.

**38.** Use of a copolymer-grafted polyolefin substrate according to any one of claims 29 to 36 in medical, pharmaceutical or cosmetic applications.

**39.** A packaging material comprising a copolymer-grafted polyolefin substrate according to any one of claims 29 to 36 used to store or contain a consumable product such as food, pharmaceutical, cosmetic or medical product.

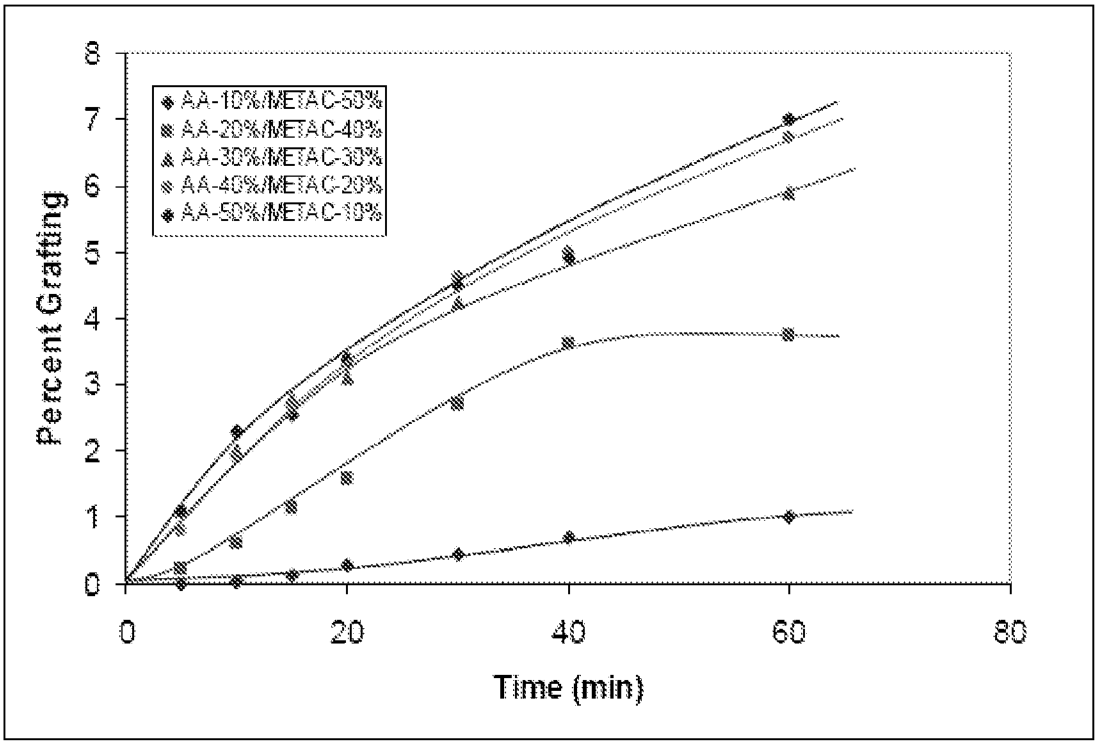


Figure 1

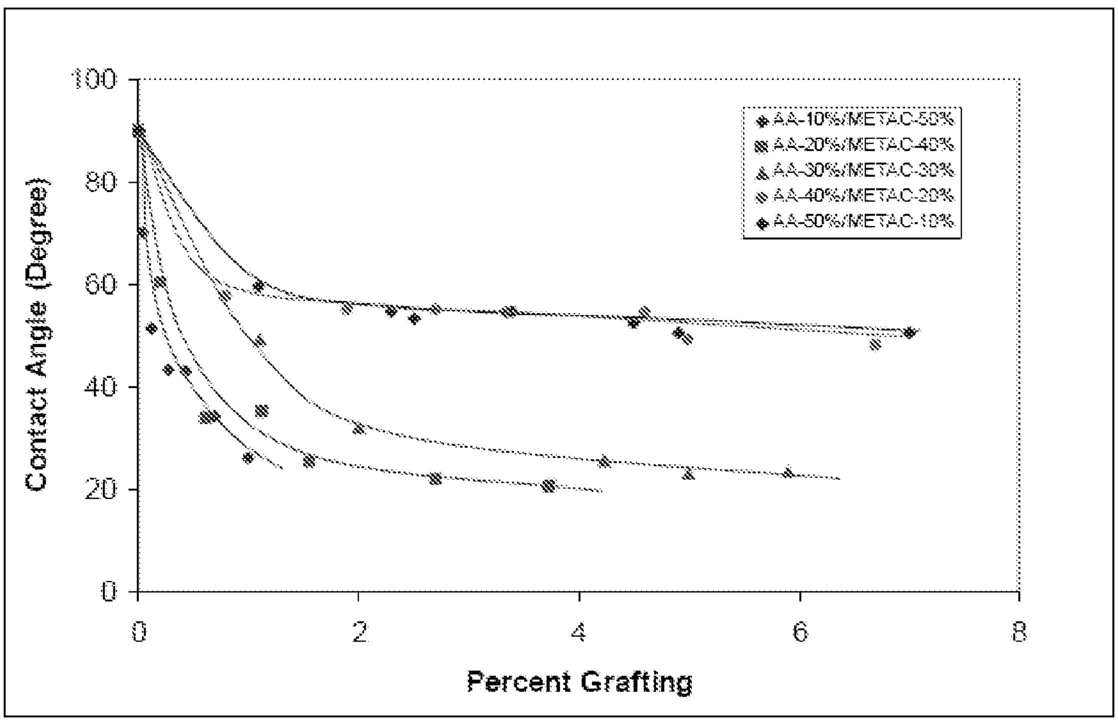


Figure 2

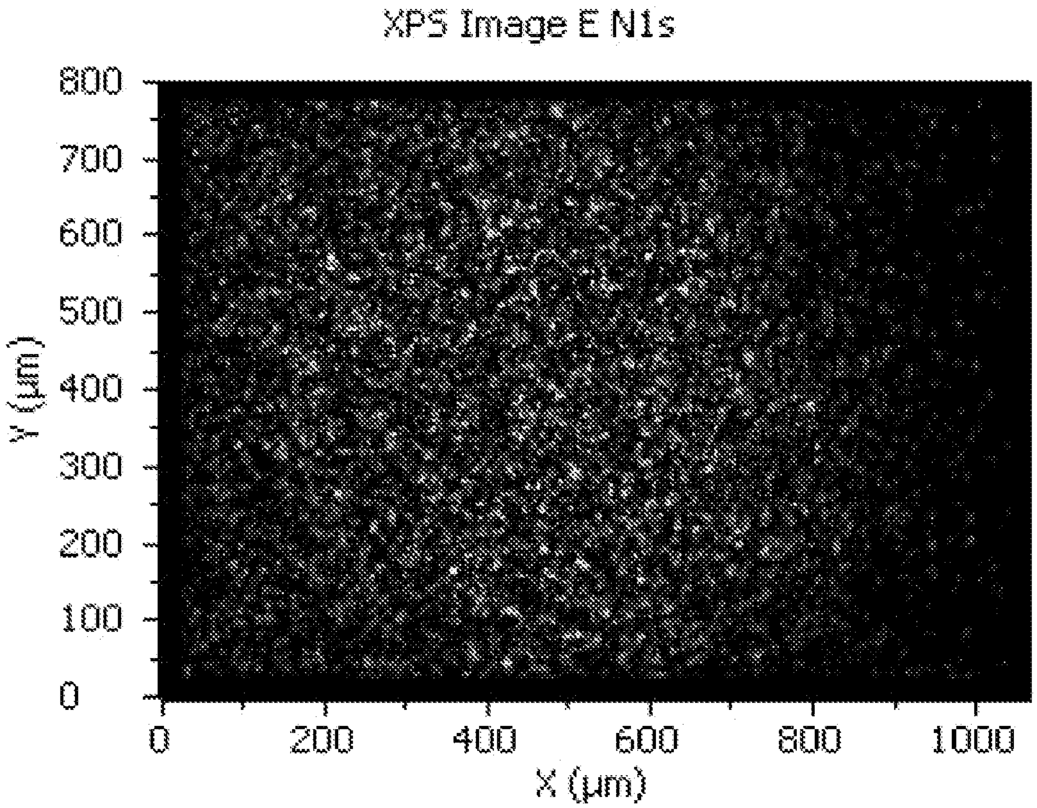


Figure 3

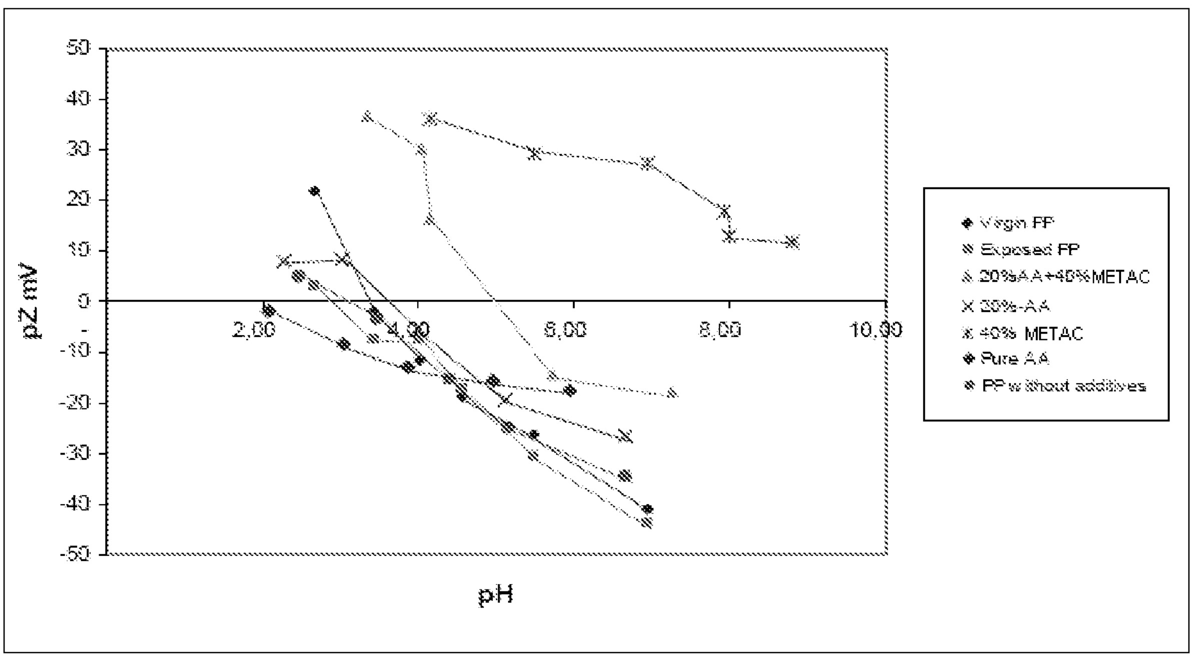


Figure 4

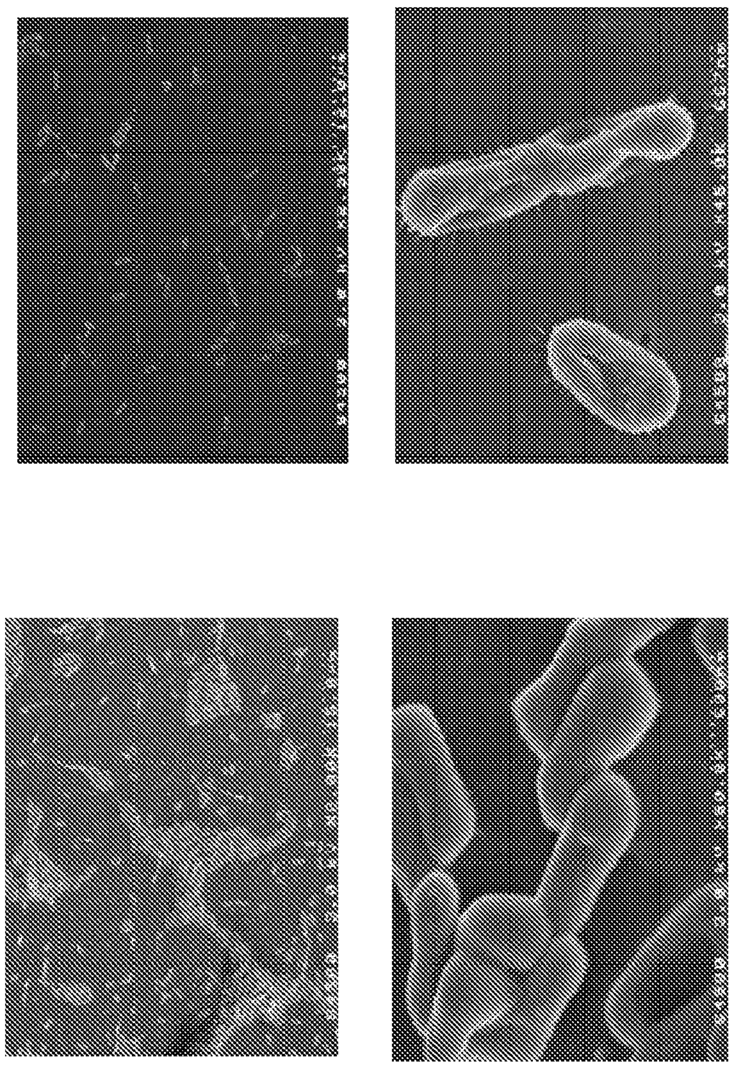

a. Exposed PP

b. PP-*g*-AA:METAC (20%:40%)

Fig. 5

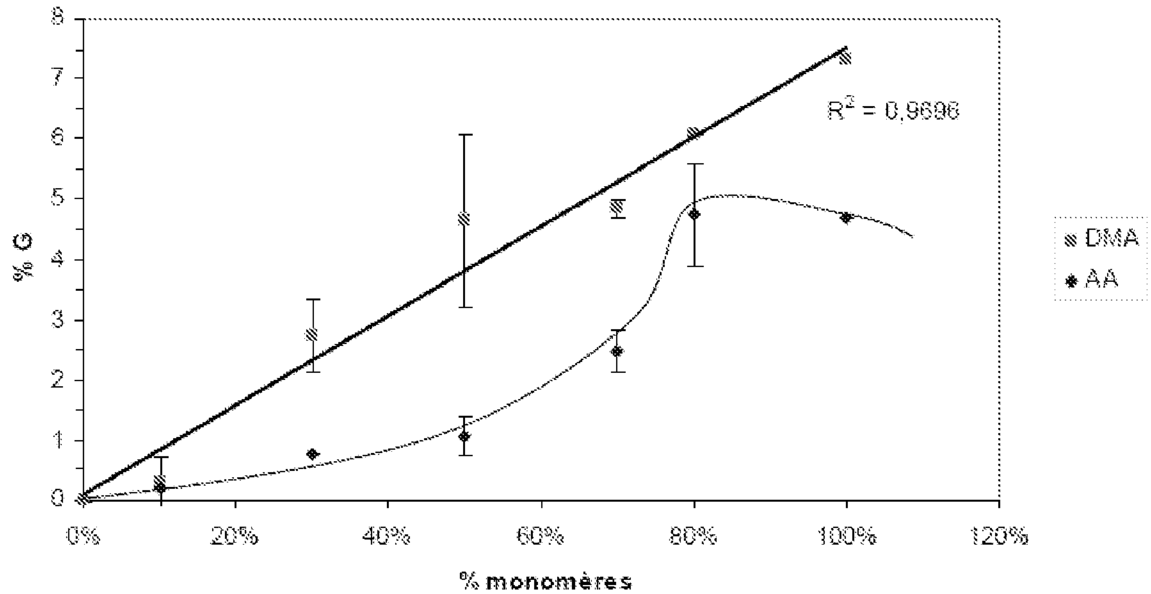


Figure 6

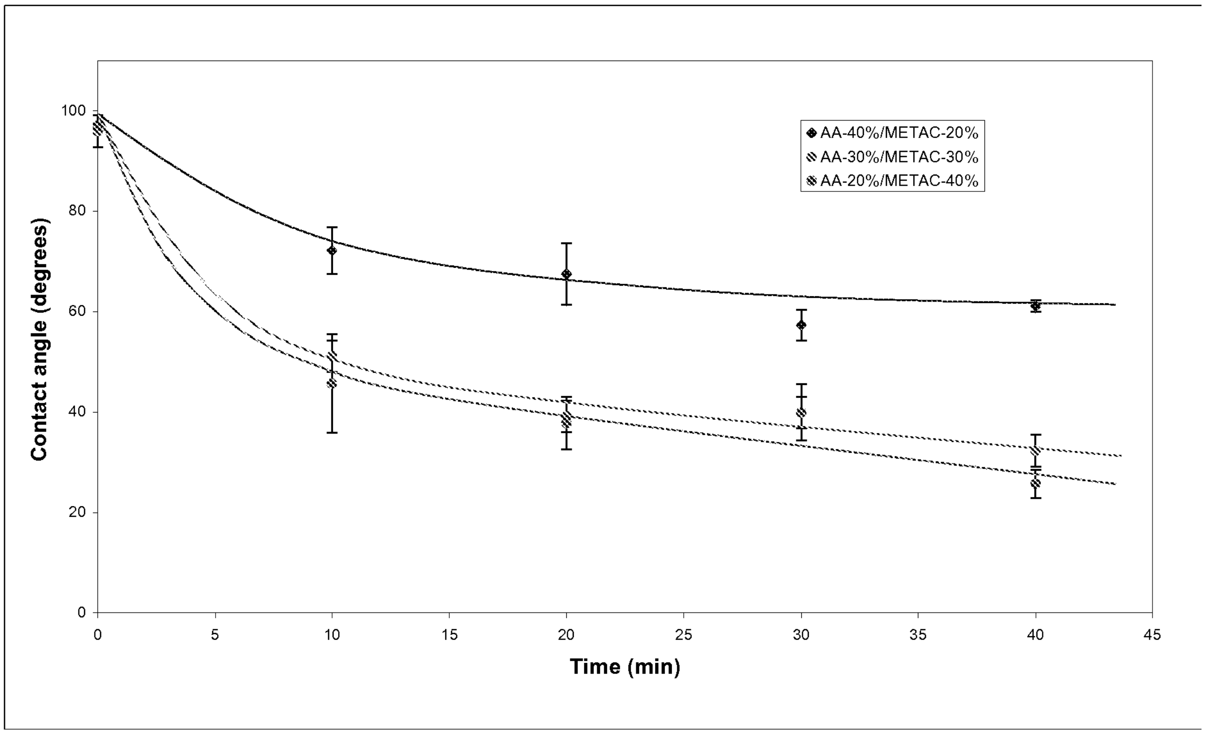


Figure 7

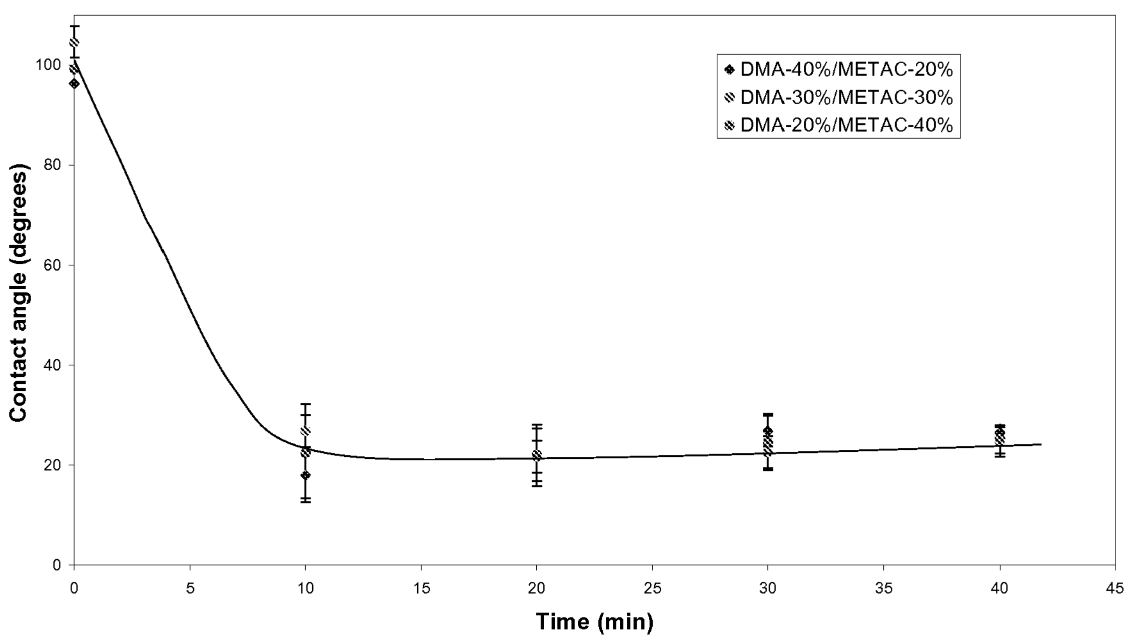


Figure 8

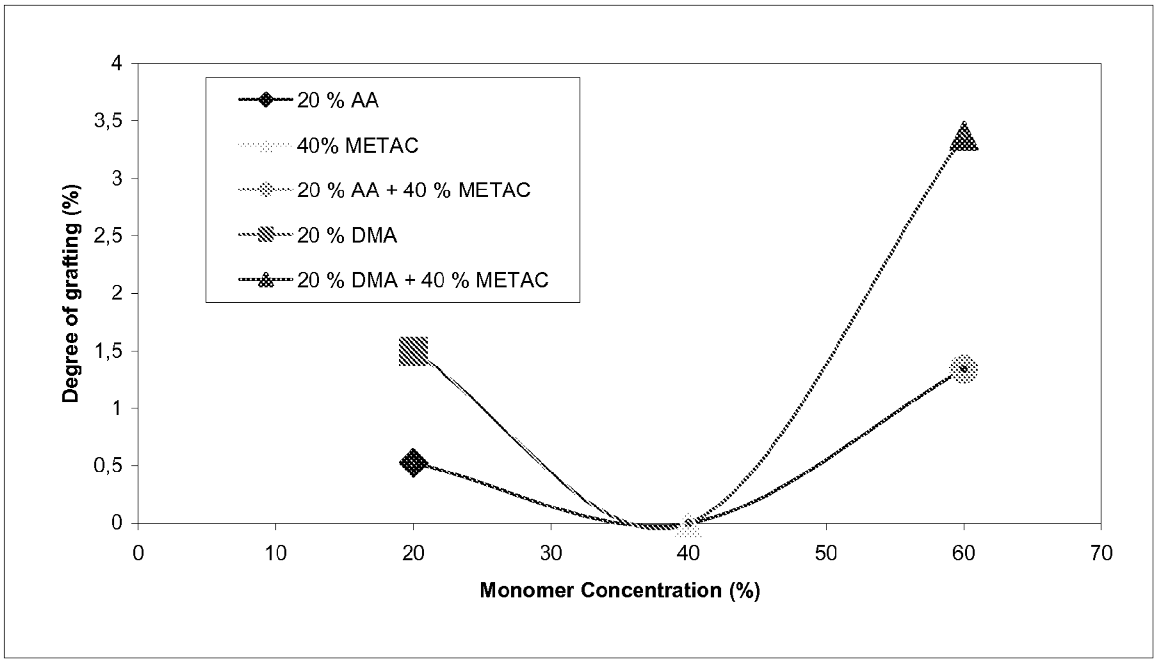


Figure 9

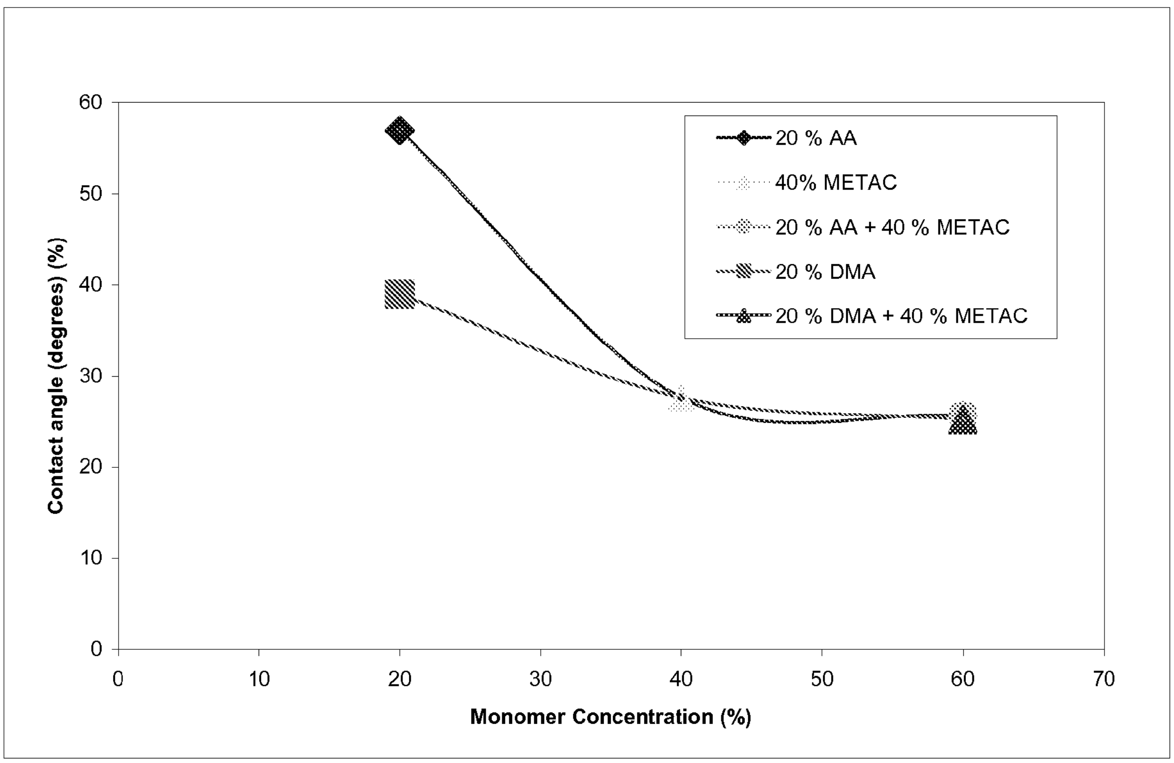


Figure 10

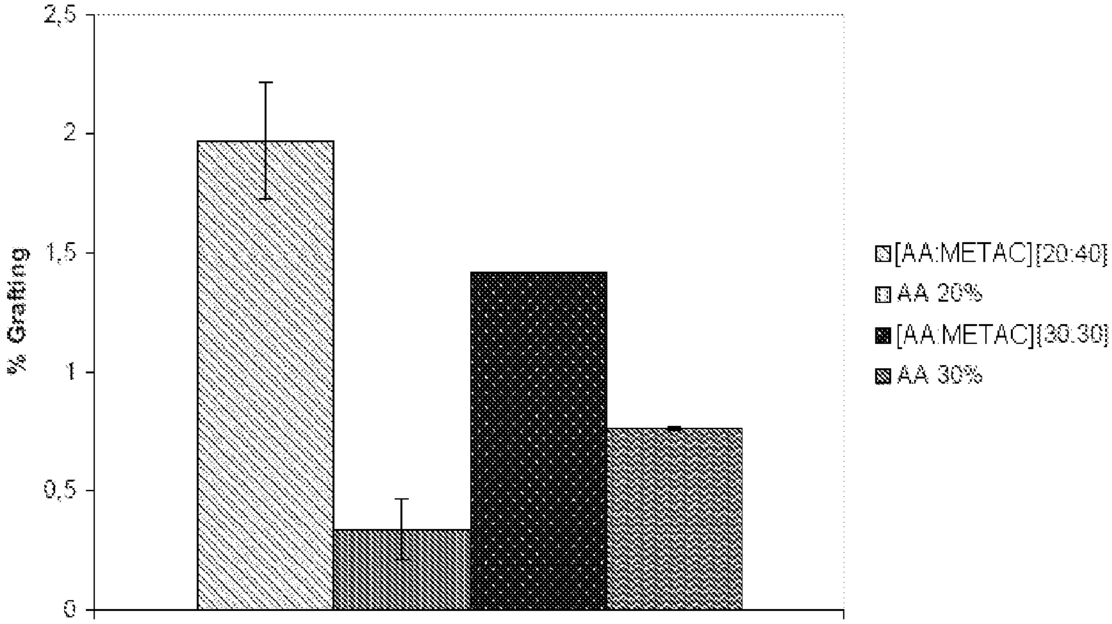


Figure 11

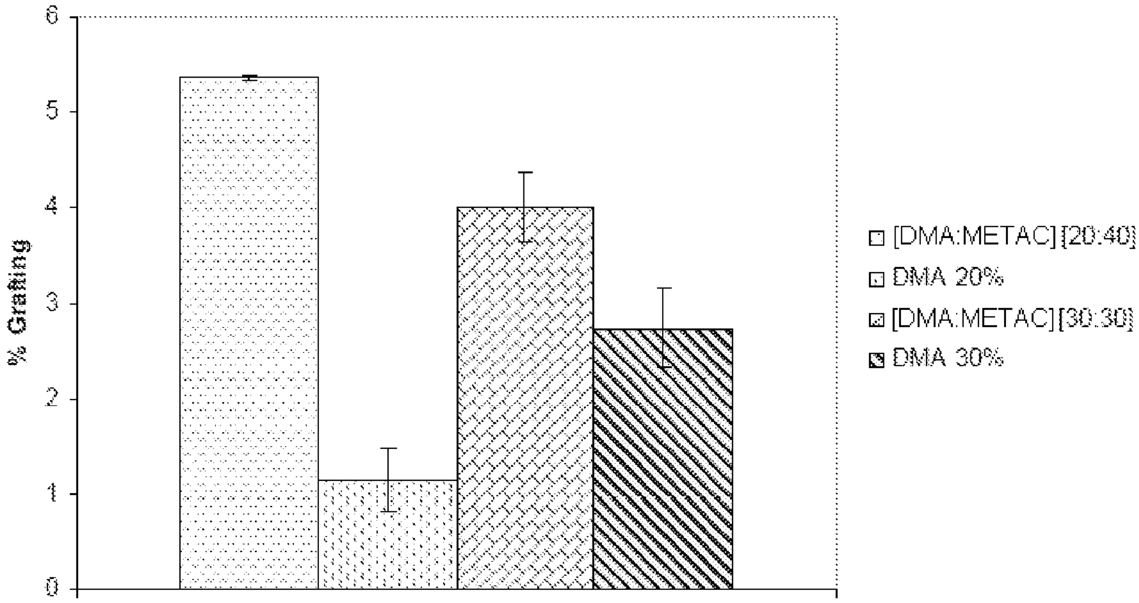


Figure 12

European Patent Office

# EUROPEAN SEARCH REPORT

Application Number
EP 07 30 1359

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | WO 00/69938 A (CREAVIS TECH & INNOVATION GMBH [DE]; OTTERSBACH PETER [DE]; SOSNA FRIE) 23 November 2000 (2000-11-23)<br>* claims 6,7 *<br>* claims 1,14,15 *<br>* page 5, line 23 "Polyolefine" *<br>* page 5, line 23 *<br>* page 7, lines 18-24 *<br>* page 8, lines 22,23 *<br>* page 9, line 1 "Acrylsäure" *<br>* page 9, line 1 *<br>* page 9, line 2; examples *<br>* page 9, line 25 - page 11, line 7 *<br>----- | 1-13,22, 25-28 | INV.<br>C08F255/00<br>C08F255/02<br>C08F291/18<br>A01N33/12<br>A01N25/10 |
| X | US 5 164 424 A (BRUESCHKE HARTMUT E A [DE] ET AL) 17 November 1992 (1992-11-17)<br>* abstract *<br>* column 11, lines 24,25 *<br>* column 6, line 48-53 "acrylic acid" *<br>* column 6, lines 48-53 *<br>* column 9, line 65 "water" *<br>* column 9, line 65 *<br>* column 9, lines 51-65 *<br>* claims 21,23 *<br>----- | 1-7, 10-12, 20,22, 25-28 | TECHNICAL FIELDS SEARCHED (IPC)<br>C08F<br>C08L<br>A01N<br>B01J |
| X | WO 2006/044785 A (DU PONT [US]; JOERGER MELISSA [US]; SABESAN SUBRAMANIAM [US]) 27 April 2006 (2006-04-27)<br>* paragraph 56 "deionised water" *<br>* paragraph [0056]; claims 1,3-5; examples 1-5 *<br>* claim 4 "acrylic acid" *<br>* paragraphs [0031], [0032] *<br>* paragraphs [0029], [0030] *<br>* paragraph [0020] *<br>* paragraphs [0022], [0023] *<br>-----<br>-/-- | 1-7,10, 11,22, 23,25-28 | |

~~The present search report has been drawn up for all claims~~

4

| Place of search | Date of completion of the search | Examiner |
|---|---|---|
| The Hague | 16 June 2008 | Hammond, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

# EUROPEAN SEARCH REPORT

Application Number
EP 07 30 1359

| Category | Citation of document with indication, where appropriate, of relevant passages | Relevant to claim | CLASSIFICATION OF THE APPLICATION (IPC) |
|---|---|---|---|
| X | DE 199 21 899 A1 (CREAVIS TECH & INNOVATION GMBH [DE]) 16 November 2000 (2000-11-16)<br>* claims 6,7 *<br>* claims 1-3,13-15 *<br>* column 5, line 56 *<br>* column 3, line 49 *<br>* column 4, line 68 *<br>* column 5, line 57; examples *<br>* column 6, line 19 - column 7, line 12 *<br>----- | 1-11,22, 25-28 | |
| X | EP 1 174 029 A (EBARA CORP [JP]) 23 January 2002 (2002-01-23)<br>* claim 3 "one or more" ** claim 3 *<br>* claims 1,2 *<br>* page 3, lines 24-26 *<br>* page 3, lines 50,51,38-41 *<br>* page 3, lines 33-35 *<br>* page 3, lines 6-13 *<br>* page 5, lines 55,56; examples *<br>----- | 1-5,22, 23,25-28 | |
| A | GB 894 753 A (CENTRE NAT RECH SCIENT; DOW CHEMICAL CO) 26 April 1962 (1962-04-26)<br>* claim 1 *<br>* page 2, lines 51,52,56 *<br>* page 1, lines 60-65; claim 7 *<br>* page 2, lines 85-98 *<br>----- | 1-13,22, 23,25-28 | TECHNICAL FIELDS SEARCHED (IPC) |
| A | GB 1 173 638 A (JAPAN ATOMIC ENERGY RES INST [JP]) 10 December 1969 (1969-12-10)<br>* claims 1,8 *<br>----- | 1-13,22, 23,25-28 | |

~~The present search report has been drawn up for all claims~~

4

| Place of search | Date of completion of the search | Examiner |
|---|---|---|
| The Hague | 16 June 2008 | Hammond, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number

EP 07 30 1359

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [ ] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [x] None of the further search fees have been paid within the fixed time limit. The present European search report has been drawn up for those parts of the European patent application which relate to the invention first mentioned in the claims, namely claims:

  1-13, 22,23, 25-28

- [ ] The present supplementary European search report has been drawn up for those parts of the European patent application which relate to the invention first mentioned in the claims (Rule 164 (1) EPC).

European Patent Office

## LACK OF UNITY OF INVENTION SHEET B

Application Number
EP 07 30 1359

The Search Division considers that the present European patent application does not comply with the requirements of unity of invention and relates to several inventions or groups of inventions, namely:

1. claims: 1-13,22,23,25-28

   A method for irradiation grafting onto a polyolefin substrate comprising the steps (a) and (b) as described in the application claim 1.
   Later claims 12-13 involve the specific use of ammonium quaternary salts as the specific antimicrobial agents.

---

2. claims: 14-19

   A further specific irradiation grafting method for polyolefins using specifically terminally-functionalised polyalkylene glycols as antimicrobial agents to provide repellent activity. The further additional contributing feature c/f the first invention is the specific use of terminally-functionalised polyalkylene glycols which have different antimicrobial activity c/f other antimicrobial agents such as ammonium quaternary salts disclosed in earlier application claims.

---

3. claim: 20

   A further irradiation grafting method comprising a specific ultrasonic washing step (c) after the grafting reaction wherein residual monomers are removed from the surface. The further additional contributing feature of claim 20 c/f previous application claims is the specific use of ultrasonic washing in a water bath at 40 degrees for 15 minutes. This ultrasonic washing process removes residuals from the grafted polyolefin substrate c/f pre-washed product, leading to a change in grafted polyolefin product properties.

---

4. claims: 21,24

   A further irradiation grafting method comprising a further specific overnight drying step (d) in an air oven at 40 degrees C.
   Claim 24 additionally relates further to the use of Mohr's salt inhibitors.
   - The further additional contributing features of claims 21,24 c/f previous claims are the specific further drying overnight stage in an air oven, as well as the use of specific homopolymer inhibtors which change the characteristic properties of the grafted polyolefin products.

---

European Patent Office

**LACK OF UNITY OF INVENTION SHEET B**

Application Number
EP 07 30 1359

The Search Division considers that the present European patent application does not comply with the requirements of unity of invention and relates to several inventions or groups of inventions, namely:

5. claims: 29-39

An independent graft copolymer product which is not dependent on any previous application claim(s).
Later claim 39 further relates to packaging materials for consumable products such as foods, pharmaceuticals etc. The further additional contributing feature(s) of claims 29-39 c/f previous claims are that the independnet graft copolymer products are completely unlimited to any previous preparation process.

---

## ANNEX TO THE EUROPEAN SEARCH REPORT ON EUROPEAN PATENT APPLICATION NO. EP 07 30 1359

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2008

| Patent document cited in search report | Publication date | Patent family member(s) | Publication date |
|---|---|---|---|
| WO 0069938 A | 23-11-2000 | AU 4519900 A | 05-12-2000 |
| | | DE 19921903 A1 | 16-11-2000 |
| | | EP 1183292 A1 | 06-03-2002 |
| US 5164424 A | 17-11-1992 | DE 3643574 A1 | 30-06-1988 |
| | | WO 8804677 A1 | 30-06-1988 |
| | | EP 0338004 A1 | 25-10-1989 |
| | | JP 7086126 B | 20-09-1995 |
| WO 2006044785 A | 27-04-2006 | CN 101080168 A | 28-11-2007 |
| | | EP 1804579 A1 | 11-07-2007 |
| | | JP 2008517143 T | 22-05-2008 |
| DE 19921899 A1 | 16-11-2000 | AU 7236300 A | 05-12-2000 |
| | | CN 1361797 A | 31-07-2002 |
| | | WO 0069934 A1 | 23-11-2000 |
| | | EP 1183293 A1 | 06-03-2002 |
| | | JP 2002544347 T | 24-12-2002 |
| | | NO 20015531 A | 11-01-2002 |
| EP 1174029 A | 23-01-2002 | WO 0064264 A1 | 02-11-2000 |
| | | JP 3885099 B2 | 21-02-2007 |
| | | US 6811771 B1 | 02-11-2004 |
| GB 894753 A | 26-04-1962 | DE 1175884 B | 13-08-1964 |
| | | FR 1288733 A | 30-03-1962 |
| | | NL 120884 C | |
| | | NL 249679 A | |
| GB 1173638 A | 10-12-1969 | DE 1720996 A1 | 29-07-1971 |
| | | FR 1538264 A | 30-08-1968 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0591024 A
- US 5879709 A


### Non-patent literature cited in the description


- Surface and Interfacial Aspects of Biomedical Polymers. Plenum Press, 1985, vol. 2, 81
- **B. GUPTA ; N. ANJUM ; R. JAIN ; N. REVAGADE ; H. SINGH.** *J. Macromol. Sci.,* 2004, vol. 44, 275
- **ANJUM, N.** Surface designing of polypropylene by critical monitoring of the grafting conditions. *J Appl Polym Sci,* 2006
- **ANJUM, N. et al.** Surface designing of polypropylene by critical monitoring of the grafting conditions: structural investigations. *J Appl Polym Sci,* 2006
- **ANJUM, N.** Surface designing of polypropylene by critical monitoring of the grafting conditions. *J. Appl. Polym. Sci.,* 2006
- Surface designing of polypropylene by critical monitoring of the grafting conditions: structural investigations. *J. Appl. Polym. Sci.,* 2006